# EUROPÄISCHE PATENTSCHRIFT

(11) **EP 4 170 812 B1**
(45) Veröffentlichungstag und Bekanntmachung des Hinweises auf die Patenterteilung: **25.11.2026**
(21) Anmeldenummer: 21203827.7
(22) Anmeldetag: 20.10.2021
(51) Int. Cl.: H01M 50/531, H01M 4/485, H01M 4/505, H01M 4/131, H01M 10/0525, H01M 10/0567, H01M 10/0568, H01M 10/0569, H01M 4/66, H01M 4/74

(54) **SEKUNDÄRE LITHIUM-IONEN-ZELLE**
SECONDARY LITHIUM-ION CELL
CELLULE SECONDAIRE AU LITHIUM-ION

(43) Veröffentlichungstag der Anmeldung: 26.04.2023
(73) Patentinhaber: VARTA Microbattery GmbH, 73479 Ellwangen Jagst (DE)
(72) Erfinder: Chumak, Ihor, 73479 Ellwangen (DE); Ensling, David, 73479 Ellwangen (DE); Pytlik, Edward, 73479 Ellwangen (DE); Scholz, Stefanie, 73479 Ellwangen (DE)
(74) Vertreter: Ostertag & Partner Patentanwälte mbB

(56) Entgegenhaltungen:
- EP-A1- 3 916 870
- US-A1- 2018 062 147
- US-A1- 2020 194 741

## Beschreibung

### ANWENDUNGSGEBIET UND STAND DER TECHNIK

Die nachstehend beschriebene Erfindung betrifft eine sekundäre Lithium-Ionen-Zelle.

Elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden Ionenstrom innerhalb der Zelle. Dieser Ionenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür oftmals Partikel auf Kohlenstoffbasis, wie beispielsweise graphitischer Kohlenstoff, eingesetzt. Es können auch andere, nicht-graphitische Kohlenstoffmaterialien verwendet werden, die zur Interkalation von Lithium geeignet sind, beispielsweise Lithiumtitanat (LTO). Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Als Aktivmaterialien für die positive Elektrode können beispielsweise Lithium-Metalloxide wie Lithiumcobaltoxid (LiCoO₂) und Lithiummanganoxid (LMO), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren, meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. In der Regel umfasst er die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm). Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Bei der Entwicklung verbesserter elektrochemischer Zellen sind allerdings noch andere Faktoren zu beachten als nur die Energiedichte. Außerordentlich wichtige Parameter sind auch der Innenwiderstand der Zellen, der möglichst niedrig gehalten werden sollte, um Leistungsverluste beim Laden und Entladen zu verringern, sowie die thermische Anbindung der Elektroden, die für eine Temperaturregulierung der Zelle essentiell sein kann. Auch diese Parameter sind für zylindrische Rundzellen, die einen Verbundkörper in Form eines Wickels enthalten, sehr wichtig. Beim Schnellladen von Zellen können aufgrund von Leistungsverlusten Wärmestaus in den Zellen auftreten, die zu massiven thermomechanischen Belastungen und in der Folge zu Verformungen und Beschädigungen der Zellstruktur führen können. Das Risiko besteht verstärkt dann, wenn die elektrische Anbindung der Stromkollektoren über separate, elektrisch leitende, an die Stromkollektoren geschweißte Ableiterfahnen erfolgt, die axial aus gewickelten Verbundkörpern austreten, da bei starken Belastungen beim Laden oder Entladen eine Erwärmung lokal an diesen Ableiterfahnen auftreten kann. Bei solchen Ableiterfahnen kann es sich beispielsweise um wenige mm breite Streifen aus einer dünnen Metallfolie handeln.

In der WO 2017/215900 A1 sind Zellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle mindestens ein Kontaktblech auf, das auf einem der Längsränder derart aufliegt, dass sich eine linienartige Kontaktzone ergibt. Das Kontaktblech ist mit dem Längsrand entlang der linienartigen Kontaktzone durch Verschweißung verbunden. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden.

Aus der US 2020/0194741 A1 ist eine Lithium-Ionen-Zelle mit einem prismatischen Elektrodenwickel bekannt. Eine versetzte Anordnung der Elektrodenbänder gewährleistet, dass unbeschichtete Randbereiche metallischer Stromkollektorbänder aus den Stirnseiten des Wickels herausragen können. Über diese kann eine elektrische Kontaktierung des Wickels erfolgen. Als positives Elektrodenaktivmaterial können beispielsweise ein Lithium-Mangan-Verbundoxid, ein Lithium-Nickel-Verbundoxid, ein Lithium-Kobalt-Verbundoxid oder ein Lithium-Eisenphosphat verwendet werden. Als negatives Elektrodenaktivmaterial können ein Titanoxid, ein Lithium-Titan-Verbundoxid wie Lithiumtitanat, ein Wolframoxid, ein amorphes Zinnoxid, ein Niob-Titan-Verbundoxid, ein Zinn-Siliziumoxid, ein Siliziumoxid und viele andere Materialien verwendet werden.

Aus der US 2018/0062147 A1 ist eine weitere Lithium-Ionen-Zelle mit einem prismatischen Elektrodenwickel bekannt. Auch hier gewährleistet eine versetzte Anordnung der Elektrodenbänder, dass unbeschichtete Randbereiche metallischer Stromkollektorbänder aus den Stirnseiten des Wickels herausragen können, über die eine elektrische Kontaktierung des Wickels erfolgen kann. Als mögliche Aktivmaterialien für die positive Elektrode sind LiNi_{1/3}Co_{1/3}Mn_{1/3}O₂, LiNiO₂, LiCoO₂, LiFeO₂, LiMn₂O₄, LiNi_{0.5}Mn_{1.5}O₄, LiCrMnO₄, and LiFePO₄ und andere Materialien genannt. Als mögliche Aktivmaterialien für die negative Elektrode sind Li₄Ti₅O₁₂, Lithium-Übergangsmetall-Verbundnitride, natürlicher Graphit, künstlich hergestellter Graphit, nicht graphitisierbarer Kohlenstoff (hard carbon) und leicht graphitisierbarer Kohlenstoff (soft carbon) genannt.

### AUFGABE UND LÖSUNG

Der vorliegenden Erfindung lag die Aufgabe zugrunde, Lithium-Ionen-Zellen bereitzustellen, die sich durch eine gegenüber dem Stand der Technik verbesserte Energiedichte auszeichnen und die gleichzeitig hervorragende Charakteristika bezüglich ihres Innenwiderstands und ihrer passiven Entwärmungsfähigkeiten besitzen.

Diese Aufgabe wird durch die Lithium-Ionen-Zelle mit den Merkmalen des Anspruchs 1 gelöst. Bevorzugte Ausgestaltungen der Zelle ergeben sich aus den abhängigen Ansprüchen.

Die erfindungsgemäße sekundäre Lithium-Ionen-Zelle weist stets die unmittelbar folgenden Merkmale a. bis k. auf:
a. die Zelle umfasst einen Elektroden-Separator-Verbund mit der Sequenz Anode / Separator / Kathode,
b. die Anode ist bandförmig ausgebildet und umfasst ein negatives Elektrodenmaterial sowie einen bandförmigen Anodenstromkollektor mit einem ersten Längsrand und einem zweiten Längsrand,
c. der Anodenstromkollektor weist einen streifenförmigen Hauptbereich, der mit einer Schicht aus dem negativen Elektrodenmaterial beladen ist, sowie einen freien Randstreifen, der sich entlang des ersten Längsrands erstreckt und der nicht mit dem Elektrodenmaterial beladen ist, auf,
d. die Kathode ist bandförmig ausgebildet und umfasst ein positives Elektrodenmaterial sowie einen bandförmigen Kathodenstromkollektor mit einem ersten Längsrand und einem zweiten Längsrand,
e. der Kathodenstromkollektor weist einen streifenförmigen Hauptbereich, der mit einer Schicht aus dem positiven Elektrodenmaterial beladen ist, sowie einen freien Randstreifen, der sich entlang des ersten Längsrands erstreckt und der nicht mit dem Elektrodenmaterial beladen ist, auf,
f. der Elektroden-Separator-Verbund liegt in Form eines Wickels mit zwei endständigen Stirnseiten vor,
g. die Elektroden-Separator-Verbund ist von einem Gehäuse umschlossen,
h. die Anode und die Kathode sind derart ausgebildet und/oder innerhalb des Elektroden-Separator-Verbunds zueinander angeordnet, dass der freie Randstreifen des Anodenstromkollektors aus einer der endständigen Stirnseiten und der freie Randstreifen des Kathodenstromkollektors aus der anderen der endständigen Stirnseiten austritt,
i. die Zelle weist ein Kontaktblech auf, das mit einem der Randstreifen in unmittelbarem Kontakt steht, wobei es sich bei dem Kontaktblech um eine Metallscheibe handelt und die Metallscheibe auf einer ihrer Seiten mindestens eine rinnenförmige und/oder punktförmige Vertiefung aufweist, die auf ihrer anderen Seite als mindestens eine linienförmige und/oder punktförmige Erhö hung hervortritt, und der Randstreifen unmittelbar an die mindestens eine Erhöhung geschweißt oder gelötet ist,
j. die Schicht aus dem negativen Elektrodenmaterial umfasst Lithiumtitanat (LTO) und
k. die Schicht aus dem positiven Elektrodenmaterial umfasst Lithiummanganoxid (LMO).

Zur Klarstellung, die Verbindung zwischen dem Kontaktblech und den Randstreifen der Anodenstromkollektoren oder der Kathodenstromkollektoren ist eine unmittelbare. Im Falle einer Verschweißung ist das Kontaktblech unmittelbar mit den freien Randstreifen verschmolzen, während im Fall der Verlötung allenfalls eine dünne Schicht aus einem Lotmetall zwischen dem Kontaktblech und den freien Randstreifen angeordnet ist.

Die unmittelbare Anbindung des Kontaktblechs an die Stromkollektoren der Elektroden kann hervorragende Entwärmungseigenschaften gewährleisten, was nachfolgend noch erläutert wird.

Weiterhin: Die freien Randstreifen, die sich entlang den ersten Längsrändern erstrecken, umfassen diese Längsränder. Die ersten Längsränder sind somit als Teil der jeweiligen Randstreifen zu betrachten.

### Elektrochemisches System

Die erfindungsgemäße Zelle ist als Lithium-Ionen-Zelle ausgebildet, weist also Elektroden auf, die Lithium reversibel aufnehmen und wieder abgeben können. Hierzu dienen das LTO in der negativen und das LMO in der positiven Elektrode.

LMO ist als Elektrodenmaterial für die positiven Elektroden von Lithium-Ionen-Batterien bereits seit längerem bekannt. Es liegt in einer Spinellstruktur vor, ähnlich der des natürlich vorkommenden Minerals MgAl₂O₄.

LTO ist als Elektrodenmaterial für die negativen Elektroden von Lithium-Ionen-Batterien gleichfalls bereits seit längerem bekannt. Es liegt ebenfalls in einer Spinellstruktur vor.

Eine Übersicht über geeignete Lithium-Mangan-Spinellverbindungen sowie über geeignete Lithiumtitanatverbindungen findet sich hier:
- J.B. Goodenough / Journal of Power Sources 174 (2007) 996-1000
- Zaghib et al. / Materials 2013, 6, 1028-1049
- Lin et al. / Journal of Power Sources 248 (2014) 1034-1041

Die erfindungsgemäße Zelle besitzt eine begrenzte Hochstromfähigkeit, insbesondere in Laderichtung und bei tiefen Temperaturen (< 10 °C).

Bevorzugt ist die erfindungsgemäße Zelle spannungskompatibel zu herkömmlichen Superkondensatoren. Bei Raumtemperatur weist sie bevorzugt eine Nominalspannung im Bereich von 2,2 - 3,0 V, insbesondere von 2,7 V auf.

### Bevorzugter kathodenseitiger Aufbau

In einer besonders bevorzugten Ausführungsform zeichnet sich die Kathode der erfindungsgemäßen Zelle durch mindestens eines der unmittelbar folgenden zusätzlichen Merkmale a. bis d. aus:
a. Das positive Elektrodenmaterial umfasst das LMO in einem Anteil von 70 Gew.-% bis 99,4 Gew.-%.
b. Das positive Elektrodenmaterial umfasst einen Elektrodenbinder und/oder ein Leitmittel.
c. Der Elektrodenbinder ist in dem positiven Elektrodenmaterial in einem Anteil von 0,5 Gew.-% bis 15 Gew.-% enthalten.
d. Das Leitmittel ist in dem positiven Elektrodenmaterial in einem Anteil von 0,1 Gew.-% bis 15 Gew.-% enthalten.

Bevorzugt sind die unmittelbar vorstehenden zusätzlichen Merkmale a. bis d. in Kombination realisiert.

Die Prozentangaben beziehen sich jeweils auf die Trockenmasse des Elektrodenmaterials, also auf das Elektrodenmaterial exklusive Elektrolyt.

Die Aktivmaterialien der Kathode sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat Styrol-Butadien-Rubber (SBR) oder Carboxymethylzellulose. Übliche Leitmittel sind Ruß, Graphit, Graphen, Kohlenstoffnanofasern und Metallpulver.

Bevorzugt weist die Schicht aus dem positiven Elektrodenmaterial auf dem Kathodenstromkollektor eine Dicke im Bereich von 20 µm bis 300 µm auf.

### Bevorzugter anodenseitiger Aufbau

In einer besonders bevorzugten Ausführungsform zeichnet sich die Anode der erfindungsgemäßen Zelle durch mindestens eines der unmittelbar folgenden zusätzlichen Merkmale a. bis d. aus:
a. Das negative Elektrodenmaterial umfasst das LTO in einem Anteil von 70 Gew.-% bis 99,4 Gew.-%.
b. Das negative Elektrodenmaterial umfasst einen Elektrodenbinder und/oder ein Leitmittel.
c. Der Elektrodenbinder ist in dem negativen Elektrodenmaterial in einem Anteil von 0,5 Gew.-% bis 15 Gew.-% enthalten.
d. Das Leitmittel ist in dem negativen Elektrodenmaterial in einem Anteil von 0,1 Gew.-% bis 15 Gew.-% enthalten.

Bevorzugt sind die unmittelbar vorstehenden zusätzlichen Merkmale a. bis d. in Kombination realisiert.

Die Prozentangaben beziehen sich auch hier jeweils auf die Trockenmasse des Elektrodenmaterials, also auf das Elektrodenmaterial exklusive Elektrolyt.

Die Aktivmaterialien der Anode sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat Styrol-Butadien-Rubber (SBR) oder Carboxymethylzellulose. Übliche Leitmittel sind Ruß, Graphit, Graphen, Kohlenstoffnanofasern und Metallpulver.

Bevorzugt weist die Schicht aus dem negativen Elektrodenmaterial auf dem Anodenstromkollektor eine Dicke im Bereich von 20 µm bis 300 µm auf.

### Separator

Der Elektroden-Separator-Verbund umfasst bevorzugt mindestens einen bandförmigen Separator, besonders bevorzugt zwei bandförmige Separatoren, der oder die jeweils einen ersten und einen zweiten Längsrand sowie zwei Enden aufweisen.

Bevorzugt werden die Separatoren aus elektrisch isolierenden Kunststofffolien gebildet. Es ist bevorzugt, dass die Separatoren von einem flüssigen Elektrolyten durchdrungen werden können. Zu diesem Zweck können die verwendeten Kunststofffolien beispielsweise Poren aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

Die Separatoren werden für den Betrieb mit einem flüssigen Elektrolyten getränkt.

Alternativ zu einer Separator-Flüssigelektrolyt-Kombination kann die Zelle allerdings beispielsweise auch einen Festkörperelektrolyt aufweisen.

Bei dem Festkörperelektrolyt handelt es sich bevorzugt um einen Polymerfestkörperelektrolyten basierend auf einem Polymer-Leitsalzkomplex, der einphasig ohne jegliche Flüssigkomponente vorliegt. Als Polymermatrix kann ein Polymerfestkörperelektrolyt Polyacrylsäure (PAA), Polyethylenglycol (PEG) oder Polymethylmethacrylat (PMMA) aufweisen. In diesen können Lithium-Leitsalze wie beispielsweise Lithium-bis-(trifluoromethan)sulfonylimid (LiTFSI), Lithiumhexafluorophosphat (LiPF₆) und Lithiumtetrafluoroborat (LiBF₄) gelöst vorliegen.

### Elektrolyt

In den meisten Fällen ist es bevorzugt, dass die Zelle einen flüssigen Elektrolyten umfasst, welcher aus einem Lösemittel oder Lösemittelgemisch und einem lithiumionenhaltigen Leitsalz besteht und mit dem der Separator getränkt ist.

Die Zelle umfasst bevorzugt einen Elektrolyten, der ein Lösemittel oder ein Lösemittelgemisch aus der Gruppe mit Acetonitril (ACN), Propylencarbonat (PC), γ-Butyrolacton (GBL), Adiponitril (ADN), Ethylencarbonat-Diethylcarbonat (EC-DEC), Ethylencarbonat-Dimethylcarbonat (EC-DMC), Ethylencarbonat-Ethylmethylcarbonat (EC-EMC), Ethylencarbonat-Dimethylcarbonat-Ethylmethylcarbonat (EC-DMC-EMC) und Ethylencarbonat-Dimethylcarbonat-Diethylcarbonat (EC-DMC-DEC) umfasst.

Es ist weiterhin bevorzugt, dass die Zelle einen Elektrolyten umfasst, der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃.

Das Leitsalz ist in dem Elektrolyten bevorzugt in einem Anteil von 0,5 M bis 5 M, insbesondere von 2 M, enthalten.

In einigen bevorzugten Ausführungsformen umfasst der Elektrolyt ein Additiv aus der Gruppe mit Vinylencarbonat (VC) und Fluorethylencarbonat (FEC).

In einer ersten, besonders bevorzugten Variante zeichnet sich die erfindungsgemäße Zelle hinsichtlich des Elektrolyten durch mindestens eines der drei unmittelbar folgenden zusätzlichen Merkmale a. bis c. aus:
a. Die Zelle umfasst einen Elektrolyten, der als Lösemittel Acetonitril (ACN) umfasst.
b. Die Zelle umfasst einen Elektrolyten, der der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃, insbesondere Lithiumtetrafluoroborat (LiBF₄), umfasst.
c. Das Leitsalz ist in einer Konzentration von 1,0 bis 3,0 M, insbesondere von 1,5 bis 2,5 M, in dem Elektrolyten enthalten.

Besonders bevorzugt sind die drei unmittelbar vorstehenden Merkmale a. bis c. in Kombination miteinander realisiert.

In einer zweiten, besonders bevorzugten Variante zeichnet sich die erfindungsgemäße Zelle hinsichtlich des Elektrolyten durch mindestens eines der vier unmittelbar folgenden zusätzlichen Merkmale a. bis d. aus:
a. Die Zelle umfasst einen Elektrolyten, der als Lösemittel eine Mischung aus Propylencarbonat (PC) und γ-Butyrolacton (GBL) umfasst.
b. Das Volumenverhältnis von PC : zu GBL in der Mischung liegt im Bereich von 10 : 90 bis 90 : 10, besonders bevorzugt beträgt es 30 : 70.
c. Die Zelle umfasst einen Elektrolyten, der der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃ umfasst.
d. Das Leitsalz ist in einer Konzentration von 0,5 bis 5 M, insbesondere von 2 M, in dem Elektrolyten enthalten.

Besonders bevorzugt sind die vier unmittelbar vorstehenden Merkmale a. bis d. in Kombination miteinander realisiert.

In einer dritten, besonders bevorzugten Variante zeichnet sich die erfindungsgemäße Zelle hinsichtlich des Elektrolyten durch mindestens eines der drei unmittelbar folgenden zusätzlichen Merkmale a. bis c. aus:
a. Die Zelle umfasst einen Elektrolyten, der als Lösemittel Propylencarbonat (PC) umfasst.
b. Die Zelle umfasst einen Elektrolyten, der der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃, insbesondere Lithiumhexafluorophosphat (LiPF₆), umfasst.
c. Das Leitsalz ist in einer Konzentration von 1,0 bis 2,0 M in dem Elektrolyten enthalten.

Besonders bevorzugt sind die drei unmittelbar vorstehenden Merkmale a. bis c. in Kombination miteinander realisiert.

In einer vierten, besonders bevorzugten Variante zeichnet sich die erfindungsgemäße Zelle hinsichtlich des Elektrolyten durch mindestens eines der fünf unmittelbar folgenden zusätzlichen Merkmale a. bis e. aus:
a. Die Zelle umfasst einen Elektrolyten, der als Lösemittel eine Mischung aus Ethylencarbonat (EC) und Dimethylcarbonat (DMC) umfasst.
b. Das Volumenverhältnis von EC : zu DMC in der Mischung liegt im Bereich von 1 : 7 bis 5 : 7, besonders bevorzugt beträgt es 3 : 7.
c. Die Zelle umfasst einen Elektrolyten, der der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃, insbesondere Lithiumhexafluorophosphat (LiPF₆), umfasst.
d. Das Leitsalz ist in einer Konzentration von 1,0 bis 2,0 M in dem Elektrolyten enthalten.
e. Der Elektrolyten umfasst Vinylencarbonat (VC) als Additiv, insbesondere in einer Konzentration von 1 Gew.-% bis 3 Gew.-%.

Besonders bevorzugt sind die fünf unmittelbar vorstehenden Merkmale a. bis e. in Kombination miteinander realisiert.

In einer fünften, besonders bevorzugten Variante zeichnet sich die erfindungsgemäße Zelle hinsichtlich des Elektrolyten durch mindestens eines der sechs unmittelbar folgenden zusätzlichen Merkmale a. bis f. aus:
a. Die Zelle umfasst einen Elektrolyten, der als Lösemittel eine Mischung aus Ethylencarbonat (EC) und Propylencarbonat (PC) und Dimethylcarbonat (DMC) umfasst.
b. Die Anteile der drei Komponenten EC, PC und DMC betragen in dem Elektrolyten relativ zueinander 1 : 2 : 7.
c. Die Zelle umfasst einen Elektrolyten, der der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃, insbesondere Lithiumhexafluorophosphat (LiPF₆), umfasst.
d. Das Leitsalz ist in einer Konzentration von 0,5 M bis 5 M in dem Elektrolyten enthalten.
e. Die Zelle umfasst einen Elektrolyten, der als Co-Leitsalz Tetraethylammoniumtetrafluoroborat (Et₄NBF₄) umfasst.
f. Das Co-Leitsalz ist in einer Konzentration von 0,1 M bis 2 M in dem Elektrolyten enthalten.

Besonders bevorzugt sind die sechs unmittelbar vorstehenden Merkmale a. bis f. in Kombination miteinander realisiert.

Besonders der Elektrolyt gemäß der ersten Variante hat sich als besonders vorteilhaft erwiesen. Das Lösemittel Acetonitril wird häufig im Kondensatorbereich für EDLCs verwendet. Für Lithium-Ionen-Zellen wird es in der Regel nicht eingesetzt, da es unter den üblichen elektrochemischen Bedingungen nicht stabil ist. Diesbezüglich traten vorliegend allerdings keine Probleme auf. Vielmehr konnte gezeigt werden, dass die erfindungsgemäße Zelle mit diesem Elektrolyten eine hervorragende Zyklisierbarkeit zeigte.

### Besonders bevorzugte Ausführungsformen des Separators

Besonders bevorzugt zeichnet sich die erfindungsgemäße Zelle durch das unmittelbar folgende Merkmal a. aus:
a. Der Separator umfasst mindestens ein anorganisches Material, das seine Widerstandsfähigkeit gegenüber thermischen Belastungen verbessert.

Dieses Material schützt den Separator vor einer Schrumpfung in Folge einer lokalen Erwärmung, wie sie insbesondere beim Anschweißen oder Anlöten des Kontaktblechs auftreten kann. Das Risiko eines Kurzschlusses wird so beträchtlich vermindert.

In einer bevorzugten Weiterbildung zeichnet sich die erfindungsgemäße Zelle durch mindestens eines der unmittelbar folgenden Merkmale a. bis c. aus:
a. Der Elektroden-Separator-Verbund umfasst einen ersten Separator und einen zweiten Separator.
b. Der erste Separator und der zweite Separator sind identisch ausgebildet.
c. Der Elektroden-Separator-Verbund weist die Sequenz Anode / erster Separator / Kathode / zweiter Separator oder die Sequenz erster Separator / Anode / zweiter Separator / Kathode auf.

Es ist besonders bevorzugt, dass die unmittelbar vorstehenden Merkmale a. und c., gegebenenfalls auch die unmittelbar vorstehenden Merkmale a. bis c., in Kombination miteinander verwirklicht sind.

Bevorzugt sind sowohl der erste als auch der zweite Separator mittels des mindestens einen anorganischen Materials gegenüber thermischen Belastungen verbessert.

In einer bevorzugten Weiterbildung zeichnet sich die erfindungsgemäße Zelle durch das unmittelbar folgende Merkmal a. aus:
a. Das mindestens eine anorganische Material ist als partikuläres Füllmaterial in dem Separator, insbesondere dem ersten Separator und/oder dem zweiten Separator, enthalten.

Bei dem Separator kann es sich also bevorzugt um eine elektrisch isolierende Kunststofffolie handeln, in die das partikuläre Füllmaterial eingelagert ist. Es ist bevorzugt, dass die Kunststofffolie von dem Elektrolyten durchdrungen werden kann, beispielsweise weil sie Mikroporen aufweist. Die Folie kann beispielsweise aus einem Polyolefin oder aus einem Polyetherketon gebildet sein. Nicht ausgeschlossen ist, dass auch Vliese und Gewebe aus solchen Kunststoffmaterialien zum Einsatz kommen können.

Der Anteil an dem partikulären Füllmaterial in dem Separator beträgt bevorzugt mindestens 40 Gew.-%, besonders bevorzugt mindestens 60 Gew.-%.

In einer weiteren bevorzugten Weiterbildung zeichnet sich die erfindungsgemäße Zelle durch das unmittelbar folgende Merkmal a. aus:
a. Das mindestens eine anorganische Material liegt als Beschichtung auf einer Oberfläche des Separators, insbesondere des ersten Separators und/oder des zweiten Separators, vor.

Bei dem Separator kann es sich also bevorzugt auch um eine Kunststofffolie oder ein Vlies oder ein Gewebe oder ein sonstiges elektrisch isolierendes Flächengebilde handeln, die oder das mit dem partikulären Füllmaterial beschichtet ist.

In diesem Fall werden bevorzugt Separatoren eingesetzt, die eine Basisdicke im Bereich von 5 µm bis 20 µm, bevorzugt im Bereich von 7 µm bis 12 µm, aufweisen. Die oben genannte bevorzugte Gesamtdicke der Separatoren ergibt sich aus der Basisdicke und der Dicke der Beschichtung.

In einigen Ausführungsformen ist nur eine Seite des Flächengebildes, insbesondere der Kunststofffolie, mit dem anorganischen Material beschichtet. In weiteren Ausführungsformen ist das Flächengebilde, insbesondere die Kunststofffolie, bevorzugt beidseitig mit dem anorganischen Material beschichtet.

Die Dicke der Beschichtung liegt bevorzugt im Bereich von 0,5 µm bis 5 µm. Hieraus ergibt sich, dass die Gesamtdicke der Separatoren im Fall einer beidseitigen Beschichtung bevorzugt im Bereich von 6 µm bis 30 µm, besonders bevorzugt im Bereich von 8 µm bis 22 µm, liegt. Im Falle einer einseitigen Beschichtung liegt die Dicke bevorzugt im Bereich von 5,5 µm bis 20,5 µm, besonders bevorzugt im Bereich von 7,5 µm bis 17 µm.

Gegebenenfalls kann es auch bevorzugt sein, dass die verwendeten Separatoren ein anorganisches Material als Füllstoff und das gleiche oder ein anderes anorganisches Material als Beschichtung umfassen.

In weiteren möglichen bevorzugten Weiterbildungen zeichnet sich die erfindungsgemäße Zelle durch mindestens eines der unmittelbar folgenden Merkmale a. bis e. aus:
a. Das mindestens eine anorganische Material ist oder umfasst ein elektrisch isolierendes Material.
b. Das mindestens eine anorganische Material ist oder umfasst mindestens ein Material aus der Gruppe mit keramischem Material, glaskeramischem Material und Glas.
c. Das mindestens eine anorganische Material ist oder umfasst ein Lithiumionen leitendes keramisches Material, beispielsweise Li₅AlO₄*Li₄SiO₄ oder LiAlSi₂O₆.
d. Das mindestens eine anorganische Material ist oder umfasst ein oxidisches Material, insbesondere ein Metalloxid.
e. Bei dem keramischen oder dem oxidischen Material handelt es sich um Aluminiumoxid (Al₂O₃), um Titanoxid (TiO₂), um Titannitrid (TiN), um Titanaluminiumnitrid (TiAIN), um ein Siliziumoxid, insbesondere Siliziumdioxid (SiO₂) oder um Titancarbonitrid (TiCN).

Es ist besonders bevorzugt, dass die unmittelbar vorstehenden Merkmale a. bis c. oder die unmittelbar vorstehenden Merkmale a. und b. und d. oder die unmittelbar vorstehenden Merkmale a. und b. und e. in Kombination miteinander verwirklicht sind.

Unter den genannten Materialien sind als Beschichtungsmaterialien Aluminiumoxid (Al₂O₃), Titanoxid (TiO₂) und Siliziumdioxid (SiO₂) besonders bevorzugt.

In weiteren möglichen bevorzugten Weiterbildungen zeichnet sich die erfindungsgemäße Zelle durch mindestens eines der unmittelbar folgenden Merkmale a. bis c. aus:
a. Der erste Separator und/oder der zweite Separator umfasst das mindestens eine anorganische Material lediglich bereichsweise.
b. Der erste Separator und/oder der zweite Separator weist entlang des ersten und/oder des zweiten Längsrands einen Randstreifen auf, in dem er das mindestens eine anorganische Material als Beschichtung und/oder als partikuläres Füllmaterial umfasst.
c. Der erste Separator und/oder der zweite Separator weist einen vorzugsweise bandförmigen Hauptbereich auf, in dem er frei von dem mindestens einen anorganischen Material ist.

Es ist besonders bevorzugt, dass die unmittelbar vorstehenden Merkmale a. bis c. in Kombination miteinander verwirklicht sind.

Es ist keinesfalls zwingend erforderlich, dass der Separator das anorganische Material in homogener Verteilung umfasst oder gleichmäßig und überall mit dem Material beschichtet ist. Vielmehr kann es sogar bevorzugt sein, dass der Separator in bestimmten Bereichen, beispielsweise in dem erwähnten Hauptbereich, frei von dem anorganischen Material ist. In diesem Bereich wird eine erhöhte thermische Beständigkeit des Separators nicht so sehr benötigt wie an den Rändern des Separators. Darüber hinaus kann das anorganische Material insbesondere in diesem Bereich zu einer ungewollten Erhöhung des Innenwiderstands der erfindungsgemäßen Zelle beitragen.

### Bevorzugte Struktur des als Wickel ausgebildeten Elektroden-Separator-Verbunds

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Vorzugsweise werden zur Herstellung des Elektroden-Separator-Verbunds die bandförmigen Elektroden gemeinsam mit dem oder den bandförmigen Separatoren einer Wickelvorrichtung zugeführt und in dieser bevorzugt um eine Wickelachse herum spiralförmig aufgewickelt. Alternativ können die Elektroden und die Separatoren auch zu dem Verbund kombiniert und dann aufgewickelt werden. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt. Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Es ist bevorzugt, dass die Längsränder des oder der Separatoren die endständigen Stirnseiten des als Wickel ausgebildeten Elektroden-Separator-Verbunds bilden.

Es ist weiterhin bevorzugt, dass die aus den endständigen Stirnseiten des Wickels austretenden Randstreifen des Anodenstromkollektors und/oder des Kathodenstromkollektors nicht mehr als 5000 µm, bevorzugt nicht mehr als 3500 µm, aus den Stirnseiten herausragen.

Besonders bevorzugt ragt der Randstreifen des Anodenstromkollektors aus der Stirnseite des Wickels nicht mehr als 2500 µm, besonders bevorzugt nicht mehr als 1500 µm, heraus. Besonders bevorzugt ragt der Randstreifen des Kathodenstromkollektors aus der Stirnseite des Wickels nicht mehr als 3500 µm, besonders bevorzugt nicht mehr als 2500 µm, heraus.

Innerhalb des Elektroden-Separator-Verbunds sind die die Anode und die Kathode bevorzugt versetzt zueinander angeordnet, so dass der Randstreifen des Anodenstromkollektors aus einer der endständigen Stirnseiten des Elektroden-Separator-Verbunds austritt und der Randstreifen des Kathodenstromkollektors aus der anderen endständigen Stirnseite des Elektroden-Separator-Verbunds austritt.

### Stromkollektoren

Es ist besonders bevorzugt, dass das erfindungsgemäße Energiespeicherelement zwei metallische Kontaktbleche umfasst, von denen eines mit dem freien Randstreifen des Anodenstromkollektors und das andere mit dem freien Randstreifen des Kathodenstromkollektors in unmittelbarem Kontakt steht, insbesondere durch Verschweißung oder Verlötung verbunden ist.

Die Stromkollektoren der erfindungsgemäßen Zelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Geeignet als Metall für den Anodenstromkollektor sind beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich Aluminium oder auch andere elektrisch leitfähige Materialien, darunter auch Aluminiumlegierungen. Auch hier kommt weiterhin auch Edelstahl in Frage, beispielsweise vom Typ 1.4404.

Bevorzugt handelt es sich bei dem Anodenstromkollektor und/oder dem Kathodenstromkollektor jeweils um eine Metallfolie mit einer Dicke im Bereich von 4 µm bis 30 µm, insbesondere eine bandförmige Metallfolie mit einer Dicke im Bereich von 4 µm bis 30 µm.

In besonders bevorzugten Ausführungsformen zeichnet sich die erfindungsgemäße Zelle durch mindestens eines der unmittelbar folgenden Merkmale a. und b. aus:
a. Der Kathodenstromkollektor umfasst Aluminium oder aus einer Aluminiumlegierung oder besteht aus dem Aluminium oder der Aluminiumlegierung.
b. Der Anodenstromkollektor umfasst Aluminium oder aus einer Aluminiumlegierung oder besteht aus dem Aluminium oder der Aluminiumlegierung.

Es ist besonders bevorzugt, dass die unmittelbar vorstehenden Merkmale a. und b. in Kombination miteinander verwirklicht sind.

Insbesondere der anodenseitige Einsatz von Stromkollektoren aus Aluminium, der sich aus der Anwendung der LTO/LMO Elektrochemie ergibt, bringt Vorteile gegenüber einer Verwendung von beispielsweise kupferbasierten Stromkollektoren. Da Aluminium leichter ist als Kupfer, kann hierdurch die Energiedichte der Zelle signifikant gesteigert werden. Darüber hinaus hat sich erwiesen, dass erfindungsgemäße Zellen mit Aluminiumfolien als Stromkollektoren und LTO-basierten Anoden sehr stabil gegenüber Tiefentladung sind. Die Tendenz zur Bildung von Dendriten erscheint deutlich verringert.

Besonders bevorzugt kann die Oberfläche der Stromkollektoren, insbesondere der Stromkollektoren auf Basis von Aluminium oder der Aluminiumlegierung, mit einer Kohlenstoffschicht beschichtet sein, insbesondere um den Kontaktwiderstand zu reduzieren. Die Schicht ist bevorzugt wenige nm bis einige µm dick und kann beispielsweise durch eine Abscheidung aus der Gasphase, beispielsweise durch ein CVD-Verfahren (CVD = chemical vapour deposition), oder ein Sprühverfahren gebildet werden.

Neben Folien können als Stromkollektoren auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen. Sie weisen entsprechend bevorzugt jeweils einen streifenförmigen Hauptbereich auf, der beidseitig mit einer Schicht aus dem jeweiligen Elektrodenmaterial beladen ist.

Wenn im Zusammenhang mit den Stromkollektoren von einer Aluminium-, Kuper- oder Nickellegierung gesprochen wird, so ist damit vorzugsweise eine Legierung gemeint, die einen Gehalt von mindestens 70 Gew.-%, bevorzugt von mindestens 90 Gew.-%, des jeweiligen Basismetalls Aluminium, Kupfer oder Nickel aufweist.

### Materialarme Ausführungsform der Stromkollektoren

In besonders bevorzugten Ausgestaltungen ist die erfindungsgemäße Zelle durch mindestens eines der unmittelbar folgenden Merkmale a. bis c. gekennzeichnet:
a. Der streifenförmige Hauptbereich des mit dem Kontaktblech bevorzugt durch Verschweißung oder Verlötung verbundenen Stromkollektors weist eine Vielzahl von Durchbrechungen auf.
b. Bei den Durchbrechungen in dem Hauptbereich handelt es sich um runde oder eckige Löcher, insbesondere Stanz- oder Bohrlöcher.
c. Der mit dem Kontaktblech bevorzugt durch Verschweißung oder Verlötung verbundene Stromkollektor ist in dem Hauptbereich perforiert, insbesondere durch Rundloch- oder Schlitzlochperforation.

Bevorzugt sind die unmittelbar vorstehenden Merkmale a. und b. oder a. und c., besonders bevorzugt die drei unmittelbar vorstehenden Merkmale a. bis c., in Kombination miteinander realisiert.

Die Vielzahl von Durchbrechungen resultiert in einem verringerten Volumen und auch in einem verringerten Gewicht des Stromkollektors. Dies macht es möglich, mehr Aktivmaterial in die Zelle einzubringen und auf diese Weise die Energiedichte der Zelle drastisch zu steigern. Energiedichtenerhöhungen bis in den zweistelligen Prozentbereich können so erreicht werden.

In einigen bevorzugten Ausführungsformen sind die Durchbrechungen mittels Laser in den streifenförmigen Hauptbereich eingebracht.

Grundsätzlich ist die Geometrie der Durchbrechungen nicht erfindungswesentlich. Wichtig ist, dass in Folge der Einbringung der Durchbrechungen die Masse des Stromkollektors verringert und mehr Platz für Aktivmaterial da ist, da die Durchbrechungen mit dem Aktivmaterial befüllt werden können.

Sehr vorteilhaft kann sein, bei der Einbringung der Durchbrechungen darauf zu achten, dass der maximale Durchmesser der Durchbrechungen nicht zu groß ist. Bevorzugt sollten die Dimensionen der Durchbrechungen nicht mehr als das doppelte der Dicke der Schicht des Elektrodenmaterials auf dem jeweiligen Stromkollektor betragen.

In besonders bevorzugten Ausgestaltungen ist die erfindungsgemäße Zelle durch das unmittelbar folgende Merkmal a. gekennzeichnet:
a. Die Durchbrechungen in dem Stromkollektor, insbesondere in dem Hauptbereich, weisen Durchmesser im Bereich von 1 µm bis 3000 µm auf.

Innerhalb dieses bevorzugten Bereiches sind Durchmesser im Bereich von 10 µm bis 2000 µm, bevorzugt von 10 µm bis 1000 µm, insbesondere von 50 µm bis 250 µm, weiter bevorzugt.

Besonders bevorzugt zeichnet sich die erfindungsgemäße Zelle weiterhin durch mindestens eines der unmittelbar folgenden Merkmale a. und b. aus:
a. Der mit dem Kontaktblech bevorzugt durch Verschweißung oder Verlötung verbundene Stromkollektor weist zumindest in einem Teilabschnitt des Hauptbereichs ein geringeres Flächengewicht auf als der freie Randstreifen desselben Stromkollektors.
b. Der mit dem Kontaktblech bevorzugt durch Verschweißung oder Verlötung verbundene Stromkollektor weist in dem freien Randstreifen keine oder weniger Durchbrechungen pro Flächeneinheit als in dem Hauptbereich auf.

Es ist besonders bevorzugt, dass die unmittelbar vorstehenden Merkmale a. und b. in Kombination miteinander verwirklicht sind.

Die Durchbrechungen sind bevorzugt im Wesentlichen gleichmäßig über den Hauptbereich verteilt.

In weiteren besonders bevorzugten Ausführungsformen zeichnet sich die erfindungsgemäße Zelle durch mindestens eines der unmittelbar folgenden Merkmale a. bis c. aus:
a. Das Flächengewicht des Stromkollektors ist in dem Hauptbereich gegenüber dem Flächengewicht des Stromkollektors in dem freien Randstreifen um 5 % bis 80 % reduziert.
b. Der Stromkollektor weist in dem Hauptbereich eine Lochfläche im Bereich von 5 % bis 80 % auf.
c. Der Stromkollektor weist in dem Hauptbereich eine Zugfestigkeit von 20 N/mm² bis 250 N/mm² auf.

Es ist besonders bevorzugt, dass die unmittelbar vorstehenden Merkmale a. bis c. in Kombination miteinander verwirklicht sind.

Die Bestimmung der Lochfläche, die häufig auch als freier Querschnitt bezeichnet wird, kann gemäß ISO 7806-1983 erfolgen. Die Zugfestigkeit des Stromkollektors in dem Hauptbereich ist gegenüber Stromkollektoren ohne die Durchbrechungen verringert. Ihre Bestimmung kann gemäß DIN EN ISO 527 Teil 3 erfolgen.

Es ist bevorzugt, dass der Anodenstromkollektor und der Kathodenstromkollektor bezüglich der Durchbrechungen gleich oder ähnlich ausgebildet sind. Die jeweils erzielbaren Energiedichteverbesserungen addieren sich. Die erfindungsgemäße Zelle zeichnet sich daher in bevorzugten Ausführungsformen weiterhin durch mindestens eines der unmittelbar folgenden Merkmale a. bis c. aus:
a. Der streifenförmige Hauptbereich des Anodenstromkollektors und der Hauptbereich des Kathodenstromkollektors sind beide durch eine Vielzahl der oben beschriebenen Durchbrechungen gekennzeichnet.
b. Die Zelle umfasst das Kontaktblech, das mit einem der Randstreifen unmittelbar verbunden ist, als erstes Kontaktblech, sowie weiterhin ein zweites Kontaktblech, das mit dem anderen Randstreifen unmittelbar verbunden ist, insbesondere durch Verschweißung oder Verlötung.

Es ist besonders bevorzugt, dass die unmittelbar vorstehenden Merkmale a. und b. in Kombination miteinander verwirklicht sind.

Die vorstehend beschriebenen bevorzugten Ausgestaltungen des mit den Durchbrechungen versehenen Stromkollektors sind unabhängig voneinander auf den Anodenstromkollektor und den Kathodenstromkollektor anwendbar.

Die Verwendung perforierter oder auf sonstige Weise mit einer Vielzahl von Durchbrechungen versehener Stromkollektoren ist bei Lithium-Ionen-Zellen bislang nicht ernsthaft in Erwägung gezogen worden, da sich solche Stromkollektoren nur sehr schlecht elektrisch kontaktieren lassen. Wie eingangs erwähnt, erfolgt die elektrische Anbindung der Stromkollektoren vielfach über separate Ableiterfahnen. Insbesondere eine Bildung zuverlässiger Schweißverbindung zwischen dieser Ableiterfahnen und perforierten Stromkollektoren ist in industriellen Massenproduktionsprozessen ohne eine inakzeptable Fehlerrate jedoch nur schwer realisierbar.

Erfindungsgemäß wird dieses Problem insbesondere durch die beschriebene Verschweißung oder Verlötung der Randstreifen mit dem oder den Kontaktblechen gelöst. Das erfindungsgemäße Konzept ermöglicht den vollständigen Verzicht auf separate Ableiterfahnen und ermöglicht so die Verwendung materialarmer, mit Durchbrechungen versehener Stromkollektoren. Insbesondere in Ausführungsformen, bei denen die freien Randstreifen der Stromkollektoren nicht mit Durchbrechungen versehen sind, kann eine Verschweißung oder Verlötung zuverlässig mit ausgesprochen geringen Ausschussraten erfolgen.

### Gehäuse

In einer besonders bevorzugten Ausführungsform zeichnet sich das Gehäuse der erfindungsgemäßen Zelle durch mindestens eines der unmittelbar folgenden Merkmale a. und b. aus:
a. Das Gehäuse, das den Elektroden-Separator-Verbund umschließt, umfasst ein metallisches, rohrförmig ausgebildetes Gehäuseteil mit einer endständigen kreisförmigen Öffnung.
b. In dem Gehäuse ist der als Wickel ausgebildete Elektroden-Separator-Verbund axial ausgerichtet, so dass der Wickelmantel an der Innenseite des rohrförmig ausgebildeten Gehäuseteils anliegt.

Es ist besonders bevorzugt, dass die unmittelbar vorstehenden Merkmale a. und b. in Kombination miteinander verwirklicht sind.

### Gehäuseverschluss

Besonders bevorzugt zeichnet sich die Zelle durch die zwei unmittelbar folgenden Merkmale a. und b. aus:
a. Das Kontaktblech umfasst einen kreisförmigen Rand.
b. Das Kontaktblech verschließt die endständige kreisförmige Öffnung des rohrförmig ausgebildeten Gehäuseteils.

Erfindungsgemäß wird also vorgeschlagen, als Kontaktblech eines mit einem kreisförmigen Rand einzusetzen und mit dem Kontaktblech die endständige kreisförmige Öffnung des rohrförmig ausgebildeten Gehäuseteils zu verschließen. Das Kontaktblech dient hier also nicht nur zum elektrischen Kontaktieren einer Elektrode, vielmehr fungiert es gleichzeitig als Gehäuseteil. Damit geht ein großer Vorteil einher, eine separate elektrische Verbindung zwischen dem Kontaktblech und einem Gehäuseteil ist nämlich nicht mehr erforderlich. Das schafft Raum innerhalb des Gehäuses und vereinfacht die Zellmontage. Zudem verleiht eine unmittelbare Anbindung eines Gehäuseteils an die Stromkollektoren einer Zelle dieser hervorragende Entwärmungseigenschaften.

In einer bevorzugten Weiterbildung zeichnet sich die erfindungsgemäße Zelle durch mindestens eines der vier unmittelbar folgenden Merkmale a. bis d. aus:
a. Das Kontaktblech ist eine Metallscheibe oder ist Teil einer Deckelbaugruppe, die eine Metallscheibe umfasst.
b. Die Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
c. Der Rand der Metallscheibe ist mit dem rohrförmig ausgebildeten Gehäuseteil über eine umlaufende Schweiß- oder Lötnaht verbunden.
d. Einer der Randstreifen ist mit der Metallscheibe durch Verschweißung oder Verlötung verbunden.

Besonders bevorzugt sind alle vier unmittelbar vorstehenden Merkmale a. bis d. in Kombination miteinander realisiert.

In einigen Ausführungsformen liegt die Metallscheibe flach auf dem ersten Längsrand auf, so dass sich eine linienartige Kontaktzone ergibt, die im Falle der spiralförmig aufgewickelten Elektroden einen spiralförmigen Verlauf aufweist. In weiteren Ausführungsformen kann der erste Längsrand und damit auch der Randstreifen umgebogen oder deformiert sein.

Damit der Rand der Metallscheibe an der Innenseite des rohrförmig ausgebildeten Gehäuseteils entlang der umlaufenden Kontaktzone anliegen kann, ist es bevorzugt, dass das rohrförmige Gehäuseteil zumindest in dem Abschnitt, in dem der Rand der Metallscheibe anliegt, einen kreisförmigen Querschnitt aufweist. Zweckmäßigerweise ist der Abschnitt hierfür hohlzylindrisch ausgebildet. Der Innendurchmesser des rohrförmigen Gehäuseteils ist in diesem Abschnitt entsprechend an den Außendurchmesser des Randes der Metallscheibe angepasst.

Die Verschweißung des Randes der Metallscheibe mit dem rohrförmig ausgebildeten Gehäuseteil kann insbesondere mittels eines Lasers durchgeführt werden. Alternativ wäre es aber auch möglich, die Metallscheibe durch Verlötung oder durch eine Verklebung zu fixieren.

Ein separates Dichtelement wird bei einer umlaufenden Schweiß- oder Lötnaht nicht benötigt. Die Metallscheibe und das rohrförmige Gehäuseteil sind über die Schweißnaht oder die Verlötung dichtend miteinander verbunden. Darüber hinaus gewährleistet die Schweiß- oder die Lötverbindung auch eine nahezu widerstandfreie elektrische Verbindung zwischen der Metallscheibe und dem rohrförmigen Gehäuseteil. Die Metallscheibe und das rohrförmige Gehäuseteil weisen in diesem Fall die gleiche Polarität auf.

In einer weiteren bevorzugten Weiterbildung zeichnet sich die erfindungsgemäße Zelle durch mindestens eines der vier unmittelbar folgenden Merkmale a. bis d. aus:
a. Das Kontaktblech ist eine Metallscheibe oder ist Teil einer Deckelbaugruppe, die eine Metallscheibe umfasst.
b. Die Zelle umfasst eine ringförmige Dichtung aus einem elektrisch isolierenden Material, die den kreisförmigen Rand der Metallscheibe umschließt.
c. Die Metallscheibe ist derart in dem rohrförmig ausgebildeten Gehäuseteil angeordnet, dass die ringförmige Dichtung entlang einer umlaufenden Kontaktzone an der Innenseite des rohrförmig ausgebildeten Gehäuseteils anliegt.
d. Einer der Randstreifen ist mit der Metallscheibe, durch Verschweißung oder Verlötung verbunden.

Besonders bevorzugt sind alle vier unmittelbar vorstehenden Merkmale a. bis d. in Kombination miteinander realisiert.

In dieser Ausführungsform wird also vorgeschlagen, ein Kontaktblech mit einem kreisförmigen Rand einzusetzen, auf den kreisförmigen Rand des Kontaktblechs eine ringförmige Dichtung aus einem elektrisch isolierenden Material aufzuziehen und mit dem Kontaktblech die endständige kreisförmige Öffnung des rohrförmig ausgebildeten Gehäuseteils zu verschließen. Alternativ kann an Stelle des Kontaktblechs eine Deckelbaugruppe eingesetzt werden, die eine Kombination aus dem Kontaktblech mit einer Metallscheibe umfasst. In diesem Fall wird die Dichtung auf den Rand der Metallscheibe aufgezogen und die endständige kreisförmige Öffnung des rohrförmig ausgebildeten Gehäuseteils mit der Deckelbaugruppe verschlossen.

Der Verschluss der Zelle kann beispielsweise durch einen Bördel- oder einen Crimpvorgang erfolgen, wobei die Dichtung bevorzugt komprimiert wird.

Damit die ringförmige Dichtung an der Innenseite entlang der umlaufenden Kontaktzone anliegen kann, ist es auch hier bevorzugt, dass das rohrförmige Gehäuseteil zumindest in dem Abschnitt, in dem die Dichtung anliegt, einen kreisförmigen Querschnitt aufweist. Zweckmäßigerweise ist der Abschnitt hierfür hohlzylindrisch ausgebildet. Der Innendurchmesser des rohrförmigen Gehäuseteils ist in diesem Abschnitt entsprechend an den Außendurchmesser des Randes der Metallscheibe mit der darauf aufgezogenen Dichtung angepasst.

Bei der Dichtung selbst kann es sich um eine übliche Kunststoffdichtung handeln, die chemisch beständig gegenüber den jeweils verwendeten Elektrolyten sein sollte. Dem Fachmann sind geeignete Dichtungsmaterialien bekannt.

Die Verschlussvariante mit der ringförmigen Dichtung aus dem elektrisch isolierenden Material führt dazu, dass das Kontaktblech gegenüber dem rohrförmig ausgebildeten Gehäuseteil elektrisch isoliert ist. Es bildet einen elektrischen Pol der Zelle. Bei der Verschlussvariante, bei der der Rand der Metallscheibe mit dem rohrförmig ausgebildeten Gehäuseteil über eine umlaufende Schweiß- oder Lötnaht verbunden ist, besitzen das rohrförmig ausgebildete Gehäuseteil und das Kontaktblech die gleiche Polarität.

### Ausführungsformen der Metallscheibe

Das Kontaktblech kann Teil der erwähnten Deckelbaugruppe sein, welche neben dem Kontaktblech die erwähnte Metallscheibe und gegebenenfalls weitere Einzelteile umfasst. Das Kontaktblech und die Metallscheibe stehen in diesem Fall bevorzugt unmittelbar oder über einen elektrischen Leiter miteinander in Kontakt. In einigen weiteren bevorzugten Ausführungsformen ist das Kontaktblech die erwähnte Metallscheibe.

In der einfachsten Ausführungsformen handelt es sich bei der Metallscheibe um ein flaches Blechteil mit kreisförmigem Umfang, das sich nur in einer Ebene erstreckt. In vielen Fällen können aber auch aufwendigere Gestaltungen bevorzugt sein. So kann die Metallscheibe profiliert sein, beispielsweise um ihr Zentrum eine oder mehrere kreisförmige Vertiefungen und/oder Erhöhungen, bevorzugt in konzentrischer Anordnung, aufweisen, was beispielsweise in einem wellenförmigen Querschnitt resultieren kann. Es ist auch möglich, dass ihre Innenseite einen oder mehrere Stege bzw. lineare Vertiefungen und/oder Erhöhungen aufweist. Weiterhin kann die Scheibe einen Rand aufweisen, der radial nach innen umgebogen ist, so dass sie einen doppellagigen Randbereich mit beispielsweise U-förmigem Querschnitt aufweist, oder radial um 90° umgebogen ist, so dass ein L-förmiger Querschnitt resultiert.

Erfindungsgemäß zeichnet sich die erfindungsgemäße Zelle durch die folgenden Merkmale a., b. und c. aus:
a. Die Metallscheibe weist auf einer ihrer Seiten mindestens eine rinnenförmige und/oder punktförmige Vertiefung auf, die auf ihrer anderen Seite als mindestens eine linienförmige und/oder punktförmige Erhöhung hervortritt.
b. Die Seite mit der mindestens einen Erhöhung steht in unmittelbarem Kontakt mit dem Randstreifen.
c. Die mindestens eine Erhöhung und der Randstreifen sind über mindestens einen Schweiß- oder Lötpunkt und/oder mindestens eine Schweiß- oder Lötnaht verbunden.

Erfindungsgemäß sind die unmittelbar vorstehenden Merkmale a. bis c. in Kombination reali-siert.

Erfindungsgemäß ist der Randstreifen also unmittelbar an die mindestens eine Erhöhung geschweißt oder gelötet.

In einigen Ausführungsformen kann der eine der Randstreifen durch den Kontakt mit der mindestens einen Erhöhung umgebogen oder deformiert sein.

Weiterhin kann es bevorzugt sein, dass als längliche Vertiefungen Sicken eingebracht werden. In einer bevorzugten Weiterbildung der Metallscheibe der erfindungsgemäßen Zelle ist diese entsprechend durch mindestens eines der beiden folgenden Merkmale a. und b. gekennzeichnet:
a. Die Metallscheibe weist auf einer ihrer Seiten mehrere rinnenförmige Vertiefungen in beispielsweise sternförmiger Anordnung auf, die auf ihrer anderen Seite als linienförmige Erhöhungen hervortreten.
b. Die Metallscheibe umfasst in jeder der rinnenförmigen Vertiefungen mindestens eine Schweiß- oder Lötnaht, vorzugsweise zwei parallele Schweißnähte, in Folge einer Verschweißung oder Verlötung der Metallscheibe mit dem Randstreifen.

Besonders bevorzugt sind die unmittelbar vorstehenden Merkmale a. und b. in Kombination realisiert.

Durch die sternförmige Anordnung sowie gegebenenfalls die Doppelschweißnaht ist eine gute und vor allem gleichmäßige Anbindung der Metallscheibe an den einen der Randstreifen gewährleistet.

### Mehrteilige Deckelbaugruppe

In einer besonders bevorzugten Weiterbildung zeichnet sich die erfindungsgemäße Zelle durch mindestens eines der unmittelbar folgenden Merkmale a. und b. aus:
a. Sie umfasst eine Deckelbaugruppe, die zusätzlich zu dem Kontaktblech die oben beschriebene Metallscheibe umfasst
b. Das Kontaktblech steht in unmittelbarem Kontakt mit dem Randstreifen und ist mit diesem Randstreifen durch Verschweißung oder Verlötung verbunden.

Besonders bevorzugt sind die unmittelbar vorstehenden Merkmale a. und b. in Kombination realisiert.

Die Deckelbaugruppe umfasst in dieser Ausführungsform also mindestens zwei Einzelteile. Die Metallscheibe dient hier zum Verschließen des Gehäuses, während das Kontaktblech den Randstreifen des Stromkollektors kontaktiert.

Das Kontaktblech kann in einigen bevorzugten Ausführungsforen einen kreisförmigen Umfang aufweisen, zwingend erforderlich ist dies aber keineswegs. In einigen Fällen kann das Kontaktblech beispielsweise ein Metallstreifen sein oder mehrere streifenförmige Segmente aufweisen, die beispielsweise in einer sternförmigen Anordnung vorliegen.

In einigen Ausführungsformen kann ein Kontaktblech verwendet werden, das mindestens einen Schlitz und/oder mindestens ein Loch und/oder mindestens eine Perforierung aufweist. Diese können dazu dienen, einer Verformung des Kontaktblechs bei der Herstellung einer Schweißverbindung oder einer Lötverbindung zu dem Randstreifen entgegenzuwirken.

Weiterhin kann das Kontaktblech Aussparungen wie Löcher oder Spalte aufweisen, die dem Zweck dienen, die Verteilung des Elektrolyten beim Dosieren zu vereinfachen und das Entweichen bei der Formation oder in Folge eines Fehlgebrauchs oder Defekts gebildeter Gase aus dem Wickelinneren zu begünstigen.

Bevorzugt liegen das Kontaktblech und die Metallscheibe zumindest bereichsweise flach aufeinander, so dass eine zweidimensionale Kontaktfläche vorliegt.

Bevorzugt stehen das Kontaktblech und die Metallscheibe in unmittelbarem Kontakt miteinander. In diesem Fall sind sie besonders bevorzugt durch Verschweißung oder Verlötung aneinander fixiert.

In besonders bevorzugten Ausführungsformen ist das Kontaktblech ausgebildet wie eine der in der WO 2017/215900 A1 beschriebenen Kontaktplatten.

In einer besonders bevorzugten Ausführungsform kann die Deckelbaugruppe zusätzlich zu der Metallscheibe und gegebenenfalls auch zusätzlich zu dem Kontaktblech einen profilierten metallischen Poldeckel mit kreisförmigem Umfang umfassen, der auf die Metallscheibe aufgeschweißt oder aufgelötet sein kann und näherungsweise oder exakt den gleichen Durchmesser wie die Metallscheibe aufweist, so dass der Rand der Metallscheibe und der Rand des Poldeckels gemeinsam den Rand der Deckelbaugruppe bilden. In einer weiteren Ausführungsform kann der Rand des Poldeckels von einem radial nach innen umgebogenen Rand der Metallscheibe umschlossen werden. In bevorzugten Ausführungsformen kann eine Klemmverbindung zwischen den beiden Einzelteilen bestehen.

### Verschweißung des Kontaktelements mit dem einen der Randstreifen

Das Konzept der Verschweißung der Ränder von Stromkollektoren mit Kontaktelementen ist bereits aus der WO 2017/215900 A1 oder aus der JP 2004-119330 A bekannt. Diese Technologie ermöglicht besonders hohe Strombelastbarkeiten und einen geringen Innenwiderstand. Bezüglich Verfahren zur elektrischen Verbindung von Kontaktelementen, insbesondere auch von scheibenförmigen Kontaktelementen, mit den Rändern von Stromkollektoren wird daher auf den Inhalt der WO 2017/215900 A1 und der JP 2004-119330 A vollumfänglich Bezug genommen.

### Gehäusevariante mit Gehäusebecher

Wie oben ausgeführt, zeichnet sich das Gehäuse der erfindungsgemäßen Zelle in einer bevorzugten Ausführungsform dadurch aus, dass es ein metallisches, rohrförmig ausgebildetes Gehäuseteil mit einer endständigen kreisförmigen Öffnung umfasst, wobei das Kontaktblech einen kreisförmigen Rand umfasst und die endständige kreisförmige Öffnung des rohrförmig ausgebildeten Gehäuseteils verschließt und einer der Randstreifen mit dem Kontaktblech durch Verschweißung oder Verlötung verbunden ist.

In einer besonders bevorzugten Weiterbildung zeichnet sich die erfindungsgemäße Zelle hinsichtlich ihres Gehäuses durch mindestens eines der unmittelbar folgenden zusätzlichen Merkmale a. und b. aus:
a. Das rohrförmig ausgebildete Gehäuseteil ist Bestandteil eines metallischen Gehäusebechers, der einen kreisförmigen Boden umfasst.
b. Der andere Randstreifen liegt unmittelbar an dem Boden an und ist mit dem Boden bevorzugt durch Verschweißung oder Verlötung verbunden.

Besonders bevorzugt sind die unmittelbar vorstehenden Merkmale a. und b. in Kombination realisiert.

Diese Variante eignet sich vor allem für Zellen gemäß der oben beschriebenen Verschlussvariante mit der ringförmigen Dichtung aus dem elektrisch isolierenden Material.

Die Verwendung von Gehäusebechern ist beim Bau von Zellgehäusen seit langem bekannt, so etwa aus der eingangs erwähnten WO 2017/215900 A1. Nicht bekannt ist hingegen die unmittelbare Anbindung eines Randstreifens eines Stromkollektors an den Boden eines Gehäusebechers, wie es hier vorgeschlagen wird.

Gemäß der vorliegenden Erfindung ist es also möglich und bevorzugt, die aus gegenüberliegenden Stirnseiten eines als Wickel ausgebildeten Elektroden-Separator-Verbunds austretenden Randstreifen von Stromkollektoren jeweils unmittelbar an ein Gehäuseteil, nämlich den Boden des Bechers und das oben beschriebene, als Verschlusselement fungierende Kontaktblech, anzukoppeln. Die Nutzung des verfügbaren Innenvolumens des Zellgehäuses für aktive Komponenten nähert sich so ihrem theoretischen Optimum.

### Gehäusematerialien

Die Wahl des Materials, aus dem der Gehäusebecher und das Kontaktblech gefertigt werden, hängt meist davon ab, ob sie mit dem Anoden- oder dem Kathodenstromkollektor in elektrischem Kontakt stehen. Bevorzugt sind grundsätzlich die gleichen Materialien, aus denen die Stromkollektoren selbst gefertigt werden. Die genannten Komponenten können beispielsweise aus den folgenden Materialien bestehen:
Legiertes oder unlegiertes Aluminium, legiertes oder unlegiertes Titan, legiertes oder unlegiertes Nickel, legiertes oder unlegiertes Kupfer, Edelstahl (beispielsweise vom Typ 1.4303 oder 1.4404), vernickelter Stahl.

Weiterhin können das Gehäuse und dessen Komponenten aus mehrschichtigen Materialien (engl.: Clad Materials) bestehen, beispielsweise eine Schicht aus einem Stahl und eine Schicht aus Aluminium oder Kupfer umfassen. Die Schicht aus Aluminium oder die Schicht aus Kupfer bildet in diesen Fällen beispielsweise die Innenseite des Gehäusebechers bzw. des Bodens des Gehäusebechers.

Weitere geeignete Materialien sind dem Fachmann bekannt.

Wenn im Zusammenhang mit den Gehäusematerialien von einer Aluminium-, Kuper- oder Nickellegierung gesprochen wird, so ist damit vorzugsweise eine Legierung gemeint, die einen Gehalt von mindestens 70 Gew.-%, bevorzugt von mindestens 90 Gew.-%, des jeweiligen Basismetalls Aluminium, Kupfer oder Nickel aufweist.

### Bevorzugte Ausgestaltungen der Elektroden

In den freien Randstreifen ist das Metall des jeweiligen Stromkollektors bevorzugt frei von dem jeweiligen Elektrodenmaterial. In einigen bevorzugten Ausführungsformen ist das Metall des jeweiligen Stromkollektors dort unbedeckt, so dass es für elektrische Kontaktierungen, beispielsweise durch die oben genannten Verschweißungen oder Verlötungen mit dem Kontaktblech, zur Verfügung steht.

In einigen weiteren Ausführungsformen kann das Metall des jeweiligen Stromkollektors in den freien Randstreifen aber auch zumindest bereichsweise mit einem Stützmaterial beschichtet sein, das thermisch beständiger als der damit beschichtete Stromkollektor ist und das sich von dem auf dem jeweiligen Stromkollektor angeordneten Elektrodenmaterial unterscheidet.

"Thermisch beständiger" soll hierbei bedeuten, dass das Stützmaterial bei einer Temperatur, bei der das Metall des Stromkollektors schmilzt, seinen festen Zustand behält. Es weist also entweder einen höheren Schmelzpunkt als das Metall auf oder aber es sublimiert oder zersetzt sich erst bei einer Temperatur, bei der das Metall bereits geschmolzen ist.

Das im Rahmen der vorliegenden Erfindung einsetzbare Stützmaterial kann grundsätzlich ein Metall oder eine Metalllegierung sein, sofern dieses oder diese einen höheren Schmelzpunkt aufweist als das Metall, aus dem die Oberfläche besteht, die mit dem Stützmaterial beschichtet ist. In vielen Ausführungsformen zeichnet sich die erfindungsgemäße Zelle allerdings bevorzugt durch mindestens eines der unmittelbar folgenden zusätzlichen Merkmale a. bis d. aus:
a. Bei dem Stützmaterial handelt es sich um ein nichtmetallisches Material.
b. Bei dem Stützmaterial handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titandioxid (TiO₂), um Titannitrid (TiN), um Titanaluminiumnitrid (TiAIN), um ein Siliziumoxid, insbesondere Siliziumdioxid (SiO₂), oder um Titancarbonitrid (TiCN).

Erfindungsgemäß ist das Stützmaterial besonders bevorzugt gemäß dem unmittelbar vorstehenden Merkmal b. und insbesondere bevorzugt gemäß dem unmittelbar vorstehenden Merkmal d. ausgebildet.

Der Begriff nichtmetallisches Material umfasst insbesondere Kunststoffe, Gläser und keramische Materialien.

Der Begriff elektrisch isolierendes Material ist vorliegend breit auszulegen. Er umfasst grundsätzlich jedes elektrisch isolierende Material, insbesondere auch besagte Kunststoffe.

Der Begriff keramisches Material ist vorliegend breit auszulegen. Insbesondere sind hierunter Carbide, Nitride, Oxide, Silicide oder Mischungen und Derivate dieser Verbindungen zu verstehen.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oder Titanoxid ist.

Es kann weiterhin bevorzugt sein, dass freie Randstreifen des Anoden- und/oder des Kathodenstromkollektors mit einem Streifen aus dem Stützmaterial beschichtet sind.

Die Hauptbereiche, insbesondere die streifenförmigen Hauptbereiche von Anodenstromkollektor und Kathodenstromkollektor, erstrecken sich bevorzugt parallel zu den jeweiligen Rändern oder Längsrändern der Stromkollektoren. Bevorzugt erstrecken sich die streifenförmigen Hauptbereiche über mindestens 90 %, besonders bevorzugt über mindestens 95 %, der Flächen von Anodenstromkollektor und Kathodenstromkollektor.

In einigen bevorzugten Ausführungsformen wird das Stützmaterial unmittelbar neben den bevorzugt streifenförmigen Hauptbereichen in Form eines Streifens oder einer Linie aufgebracht, bedeckt die freien Bereiche dabei jedoch nicht vollständig, so dass unmittelbar entlang des Längsrands das Metall des jeweiligen Stromkollektors frei liegt.

### Sonstige bevorzugte Ausgestaltungen der erfindungsgemäßen Zelle

Bei der erfindungsgemäßen Zelle kann es sich um eine Knopfzelle handeln. Knopfzellen sind zylindrisch ausgebildet und weisen eine Höhe auf, die geringer als ihr Durchmesser ist. Bevorzugt liegt die Höhe im Bereich von 4 mm bis 15 mm. Weiter ist es bevorzugt, dass die Knopfzelle einen Durchmesser im Bereich von 5 mm bis 25 mm aufweist. Knopfzellen eignen sich beispielsweise zur Versorgung von kleinen elektronischen Geräten wie Uhren, Hörgeräten und kabellosen Kopfhörern mit elektrischer Energie.

Die Nennkapazität einer als Lithium-Ionen-Zelle ausgebildeten erfindungsgemäßen Knopfzelle beträgt in der Regel bis zu 1500 mAh. Bevorzugt liegt die Nennkapazität im Bereich von 100 mAh bis 1000 mAh, besonders bevorzugt im Bereich von 100 bis 800 mAh.

Besonders bevorzugt ist die erfindungsgemäße Zelle jedoch eine zylindrische Rundzelle. Zylindrische Rundzellen weisen eine Höhe auf, die größer als ihr Durchmesser ist. Sie eignen sich insbesondere für die eingangs genannten Anwendungen mit hohem Energiebedarf, beispielsweise im Automobilbereich oder für E-Bikes oder für Elektrowerkzeuge.

Bevorzugt liegt die Höhe als Rundzelle ausgebildeter Zellen im Bereich von 15 mm bis 150 mm. Der Durchmesser der zylindrischen Rundzellen liegt bevorzugt im Bereich von 10 mm bis 60 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

Die Nennkapazität der als Lithium-Ionen-Zelle ausgebildeten erfindungsgemäßen zylindrischen Rundzelle beträgt bevorzugt bis zu 90000 mAh. Mit dem Formfaktor von 21 x 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Der Anodenstromkollektor, der Kathodenstromkollektor und der Separator sind in Ausführungsformen, bei denen die erfindungsgemäße Zelle eine zylindrische Rundzelle ist, bevorzugt bandförmig ausgebildet und weisen bevorzugt die folgenden Dimensionen auf:
- Eine Länge im Bereich von 0,5 m bis 25 m
- Eine Breite im Bereich 30 mm bis 145 mm

Der freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf.

Im Falle einer zylindrischen Rundzelle mit dem Formfaktor 18 x 65 weisen die Stromkollektoren bevorzugt
- eine Breite von 56 mm bis 62 mm, bevorzugt von 60 mm, und
- eine Länge von nicht mehr als 2 m, bevorzugt von nicht mehr als 1,5 m,
auf.

Im Falle einer zylindrischen Rundzelle mit dem Formfaktor 21 x 70 weisen die Stromkollektoren bevorzugt
- eine Breite von 56 mm bis 68 mm, bevorzugt von 65 mm, und
- eine Länge von nicht mehr als 3 m, bevorzugt von nicht mehr als 2,5 m,
auf.

In einer besonders bevorzugten Ausführungsform der Erfindung zeichnet sich die erfindungsgemäße Zelle durch das folgende zusätzliche Merkmal aus:
a. Das Kontaktblech oder die Deckelbaugruppe mit dem Kontaktblech umfasst ein Sicherheitsventil, über das bei Überschreiten eines weiteren Druckschwellwerts Druck aus dem Gehäuse entweichen kann.

Bei diesem Sicherheitsventil kann es sich beispielsweise um eine Berstmembran, ein Berstkreuz oder eine ähnliche Sollrissstelle handeln, die bei einem definierten Überdruck in der Zelle aufreißen kann, um eine Explosion der Zelle zu verhindern. Beispielsweise kann die Metallscheibe der Deckelbaugruppe das Sicherheitsventil, insbesondere in Form einer Sollrissstelle, aufweisen.

### Prismatische Ausführungsform

Die vorliegende Erfindung umfasst auch Energiespeicherelemente, die einen von einem prismatischen Gehäuse umschlossenen Stapel aus mehreren Anoden und mehreren Kathoden umfassen.

Insbesondere umfasst die Erfindung daher auch ein Energiespeicherelement mit den unmittelbar folgenden Merkmalen a. bis k.:
a. Es umfasst eine Mehrzahl von Anoden und Kathoden,
b. die Anodenumfassen jeweils einen Anodenstromkollektor und ein negatives Elektrodenmaterial,
c. die Anodenstromkollektoren weisen jeweils
   - einen Hauptbereich, der mit einer Schicht aus dem negativen Elektrodenmaterial beladen ist, sowie
   - einen freien Randstreifen, der sich entlang eines Rands der Anodenstromkollektoren erstreckt und der nicht mit dem negativen Elektrodenmaterial beladen ist, auf,
d. die Kathoden umfassen jeweils einen Kathodenstromkollektor und ein positives Elektrodenmaterial,
e. die Kathodenstromkollektoren weisen jeweils
   - einen Hauptbereich, der mit einer Schicht aus dem positiven Elektrodenmaterial beladen ist, sowie
   - einen freien Randstreifen, der sich entlang eines Rands der Kathodenstromkollektoren erstreckt und der nicht mit dem positiven Elektrodenmaterial beladen ist, auf,
f. die Anoden und Kathoden liegen gestapelt vor, wobei die Anoden und die Kathoden in dem Stapel durch Separatoren oder Schichten aus einem Festkörperelektrolyten getrennt sind,
g. der Stapel ist von einem prismatischen Gehäuse umschlossen,
h. die freien Randstreifen der Anodenstromkollektoren ragen aus einer Seite des Stapels und die freien Randstreifen der Kathodenstromkollektoren ragen aus einer anderen Seite des Stapels heraus,
i. das Energiespeicherelement weist ein Kontaktblech auf, das mit den freien Randstreifen der Anodenstromkollektoren und/oder der Kathodenstromkollektoren in unmittelbarem Kontakt steht,
j. die Schicht aus dem negativen Elektrodenmaterial umfasst Lithiumtitanat (LTO) und
k. die Schicht aus dem positiven Elektrodenmaterial umfasst Lithiummanganoxid (LMO).

Für die Schicht aus dem negativen Elektrodenmaterial, die Schicht aus dem positiven Elektrodenmaterial, die Stromkollektoren und den Separator gelten die gleichen bevorzugten Weiterbildungen wie im Fall der erfindungsgemäßen Lithium-Ionen-Zelle. Gleiches gilt für den Elektrolyten, sofern das Energiespeicherelement einen aufweist.

### KURZBESCHREIBUNG DER ZEICHNUNGEN

In den Zeichnungen zeigen schematisch
- Fig. 1 eine Draufsicht eines Stromkollektors in einer erfindungsgemäßen Ausgestaltung,
- Fig. 2 eine geschnittene Ansicht des in Fig. 1 dargestellten Stromkollektors,
- Fig. 3 eine Draufsicht auf eine Anode, die zu einem Elektroden-Separator-Verbund in Form eines Wickels verarbeitet werden kann,
- Fig. 4 eine geschnittene Ansicht der in Fig. 3 dargestellten Anode,
- Fig. 5 eine Draufsicht auf einen unter Verwendung der in Fig. 3 dargestellten Anode gefertigten Elektroden-Separator-Verbund,
- Fig. 6 eine geschnittene Ansicht des in Fig. 5 dargestellten Elektroden-Separator-Verbunds,
- Fig. 7 verschiedene Ausführungsformen eines Kontaktblechs oder einer Deckelbaugruppe einer erfindungsgemäßen Zelle (Querschnittsdarstellungen),
- Fig. 8 eine Teildarstellung einer Ausführungsform einer erfindungsgemäßen Zelle (Querschnittsdarstellung),
- Fig. 9 eine Teildarstellung einer weiteren Ausführungsform einer erfindungsgemäßen Zelle (Querschnittsdarstellung),
- Fig. 10 eine Darstellung einer weiteren Ausführungsform einer erfindungsgemäßen Zelle (Querschnittsdarstellung), und
- Fig. 11 eine Darstellung einer weiteren Ausführungsform einer erfindungsgemäßen Zelle (Querschnittsdarstellung).
- Fig. 12 graphische Darstellungen der Ergebnisse dreier Zyklisierungsuntersuchungen.

### DETAILLIERTE BESCHREIBUNG DER AUSFÜHRUNGSBEISPIELE

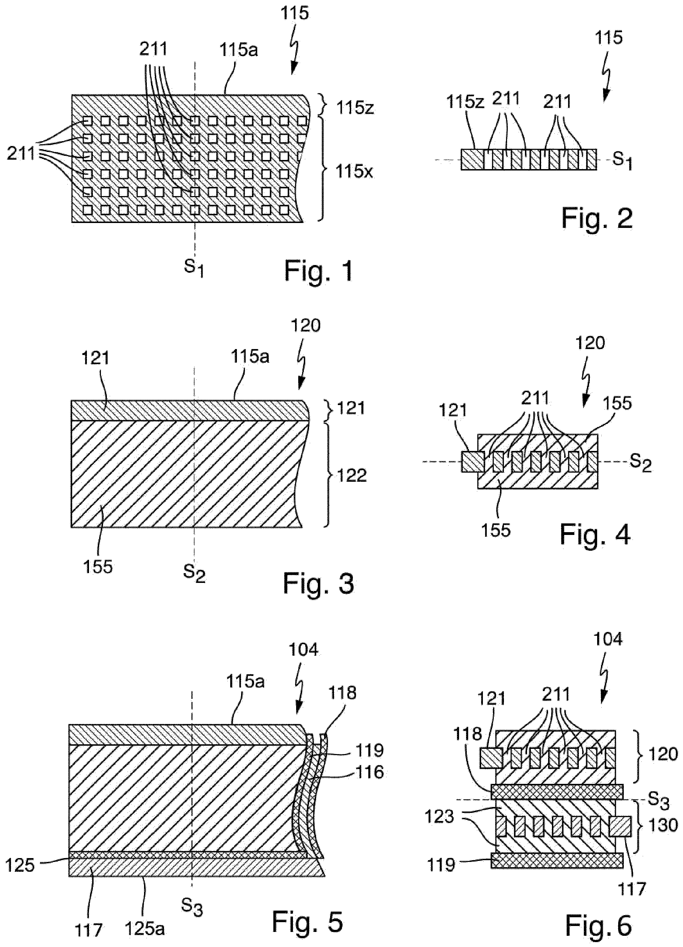

Fig. 1 und Fig. 2 veranschaulichen das Design eines Stromkollektors 115, der in einer erfindungsgemäßen Zelle verwendet werden kann. Bei Fig. 2 handelt es sich um einen Schnitt entlang S₁. Der Stromkollektor 115 umfasst eine Vielzahl Durchbrechungen 211, bei denen es sich um rechteckige Löcher handelt. Der Bereich 115x ist durch die Durchbrechungen 211 gekennzeichnet, wohingegen sich im Bereich 115z entlang des Längsrands 115a keine Durchbrechungen finden. Der Stromkollektor 115 weist daher im Bereich 115x ein deutlich geringeres Flächengewicht auf als im Bereich 115z.

Fig. 3 und Fig. 4 veranschaulichen eine Anode 120, die unter beidseitigem Auftrag eines negativen Elektrodenmaterials 155 auf den in Fig. 1 und Fig. 2 dargestellten Stromkollektor 115 gefertigt wurde. Bei Fig. 4 handelt es sich um einen Schnitt entlang S₂. Der Stromkollektor 115 weist nun einen streifenförmigen Hauptbereich 122 auf, der mit einer Schicht aus dem negativen Elektrodenmaterial 123 beladen ist, sowie einen freien Randstreifen 121, der sich entlang des Längsrands 115a erstreckt und der nicht mit dem Elektrodenmaterial 155 beladen ist. Das Elektrodenmaterial 155 befüllt darüber hinaus auch die Durchbrechungen 211.

**Fig. 5** und **Fig. 6** veranschaulichen einen Elektroden-Separator-Verbund 104, der unter Verwendung der in Fig. 3 und Fig. 4 dargestellten Anode 120 gefertigt wurde. Daneben umfasst er die Kathode 130 sowie die Separatoren 118 und 119. Bei Fig. 6 handelt es sich um einen Schnitt entlang S₃. Die Kathode 130 baut auf dem gleichen Stromkollektordesign auf wie die Anode 120. Bevorzugt bestehen die Stromkollektoren 115 und 125 von Anode 120 und Kathode 130 beide aus Aluminium. Der Stromkollektor 125 der Kathode 130 umfasst einen streifenförmigen Hauptbereich 116, der mit einer Schicht aus positivem Elektrodenmaterial 123 beladen ist, sowie einen freien Randstreifen 117, der sich entlang des Längsrands 125a erstreckt und der nicht mit dem Elektrodenmaterial 123 beladen ist. Der Elektroden-Separator-Verbund 104 liegt erfindungsgemäß bevorzugt in Form eines spiralförmigen Wickels vor und kann in einer erfindungsgemäßen Zelle enthalten sein.

Die freien Randstreifen 117 und 121 sind in einigen bevorzugten Ausführungsformen beidseitig sowie zumindest bereichsweise mit einem elektrisch isolierenden Stützmaterial, beispielsweise mit einem keramischen Material wie Silizium- oder Aluminiumoxid, beschichtet.

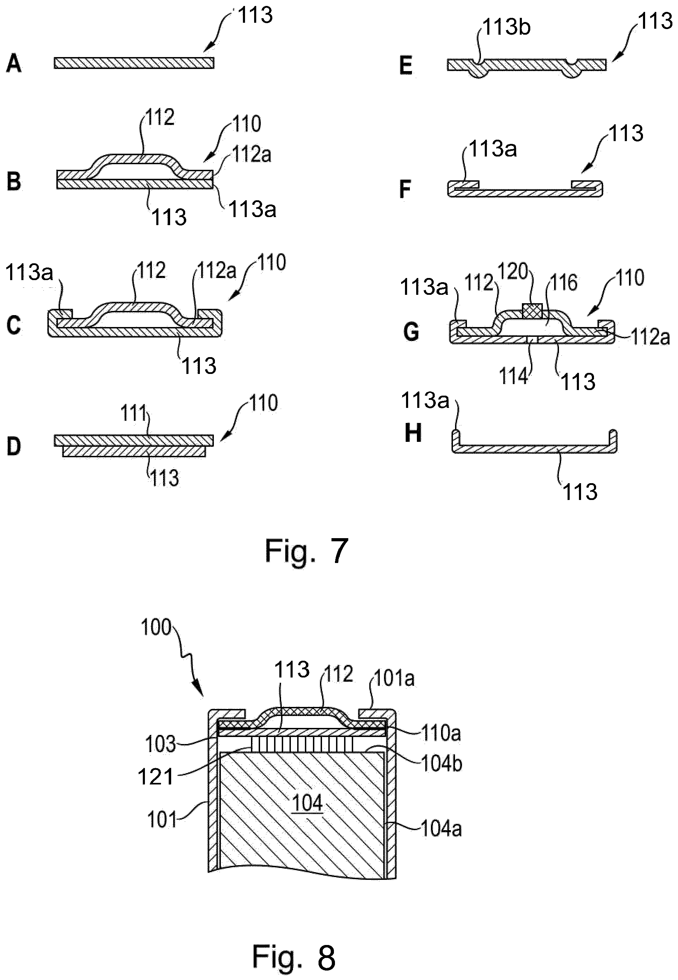

In Fig. 7 finden sich Querschnittsdarstellungen verschiedener Ausführungsformen A bis H von Kontaktblechen und Deckelbaugruppen, die sich zum Verschließen erfindungsgemäßer Zellen 100 eignen. Im Einzelnen:
A Hier ist die einfachste Ausführungsform eines Kontaktblechs 113 gemäß der Erfindung dargestellt, nämlich eine flache Metallscheibe mit kreisrundem kreisförmigem Umfang, welche sich nur in einer Ebene erstreckt. Die Metallscheibe kann beispielsweise aus Aluminium bestehen.
B Die hier dargestellte Deckelbaugruppe 110 umfasst das als Metallscheibe ausgebildete Kontaktblech 113 und den metallischen Poldeckel 112. Die Kontaktblech 113 und der Poldeckel 112 weisen jeweils einen kreisförmigen Umfang und einen identischen Durchmesser auf. Während sich das Kontaktblech 113 nur in einer Ebene erstreckt, weist der Poldeckel 112 eine zentrale Wölbung auf. Die beiden Komponenten 112 und 113 der Deckelbaugruppe 110 sind bevorzugt durch eine Verschweißung oder eine Verlötung (nicht dargestellt) miteinander verbunden.
C Die hier dargestellte Deckelbaugruppe 110 umfasst das als Metallscheibe ausgebildete Kontaktblech 113 und den metallischen Poldeckel 112. Der Poldeckel 112 ist analog zu dem Poldeckel in B ausgebildet. Allerdings ist der Rand 113a des Kontaktblechs 113 hier radial nach innen umgebogen, so dass das Kontaktblech 113 im Randbereich einen U-förmigen Querschnitt aufweist. Der umgebogene Rand 113a umschließt den Rand 112a des Poldeckels 112 und fixiert so den Poldeckel 112 auf dem Kontaktblech 113. Ungeachtet dessen ist es bevorzugt, wenn das Kontaktblech 113 und der Poldeckel 112 zusätzlich miteinander verschweißt oder verlötet sind.
D Die hier dargestellte Deckelbaugruppe 110 umfasst das als Metallscheibe ausgebildete Kontaktblech 113 und die Metallscheibe 112. Das Kontaktblech 113 liegt flach an der Metallscheibe 112 an und ist mit dieser vorzugsweise verschweißt oder verlötet. Die Metallscheibe 112 kann beispielsweise aus Edelstahl bestehen, das Kontaktblech 113 beispielsweise aus einer Aluminiumlegierung.
E Das hier dargestellte Kontaktblech 113 ist als Metallscheibe ausgebildet. Diese weist im Unterschied zu der in A dargestellten Metallscheibe auf ihrer Oberseite eine kreisförmige Vertiefung 113b sowie auf ihrer Unterseite eine dazu korrespondierende Erhöhung auf, ist also profiliert.
F Das hier dargestellte Kontaktblech 113 umfasst lediglich eine Metallscheibe. Diese weist im Unterschied zu der in A dargestellten Metallscheibe einen radial nach innen umgeschlagenen Rand 113a und in der Folge einen doppellagigen Randbereich auf.
G Die hier dargestellte Deckelbaugruppe 110 umfasst das als Metallscheibe ausgebildete Kontaktblech 113 und den metallischen Poldeckel 112, der eine zentrale Wölbung aufweist. Der Rand 113a des Kontaktblechs 113 ist radial nach innen umgebogen, so dass das Kontaktblech 113 im Randbereich einen U-förmigen Querschnitt aufweist. Der umgebogene Rand 113a umschließt den Rand 112a des Poldeckels 112 und fixiert so den Poldeckel 112 auf dem Kontaktblech 113. Bevorzugt sind die Ränder 131a und 112a des Kontaktblechs 113 und des Poldeckels 112 zusätzlich durch eine umlaufende Schweiß- oder Lötnaht (nicht dargestellt) miteinander verbunden. Im Zentrum des Kontaktblechs 113 findet sich das Loch 114, durch das ein Hohlraum 116 zugänglich ist, der von dem Kontaktblech 113 und dem Poldeckel 112 eingeschlossen ist. In den Poldeckel 112 ist eine Überdrucksicherung 120 integriert, die bei einem Überdruck im Hohlraum 116 auslösen kann. Bei der Überdrucksicherung 120 kann es sich im einfachsten Fall um eine Sollrissstelle handeln.
H Das hier dargestellte Kontaktblech 113 ist als Metallscheibe ausgebildet. Es weist einen um 90° umgebogenen Rand 113a mit L-förmigem Querschnitt auf.

Verschlusselemente gemäß der vorliegenden Erfindung, die im Rahmen der oben beschriebenen Gehäusevariante mit zwei Deckeln zum Einsatz kommen können, können bevorzugt ebenso gemäß den Ausführungsformen A bis H ausgestaltet sein.

Die in Fig. 8 dargestellte Zelle 100 umfasst die in Fig. 7B dargestellte Deckelbaugruppe 110, deren Rand 110a von den Rändern 113a und 112a des als Metallscheibe ausgebildeten Kontaktblechs 113 und des metallischen Poldeckels 112 gebildet wird. Die Deckelbaugruppe 110 bildet gemeinsam mit dem Gehäuseteil 101 das Gehäuse der Zelle 100 und verschließt eine endständige Öffnung des Gehäuseteils 101. Der Rand 110a der Deckelbaugruppe 110 liegt entlang einer umlaufenden Kontaktzone an der Innenseite 101b des rohrförmig ausgebildeten Gehäuseteils 101 an und ist mit dem rohrförmig ausgebildeten Gehäuseteil 101 über eine umlaufende Schweiß- oder Lötnaht verbunden. Der Rand 101a des Gehäuseteils 101 ist radial nach innen über den Rand 110a der Deckelbaugruppe 110 umgebogen.

In dem Gehäuse ist der spiralförmig gewickelte Elektroden-Separator-Verbund 104 axial ausgerichtet, so dass sein Wickelmantel 104a an der Innenseite des rohrförmig ausgebildeten Gehäuseteils 101 anliegt. Aus der obenliegenden Stirnseite 104b des als Wickel ausgebildeten Elektroden-Separator-Verbunds 104 tritt der nicht mit Elektrodenmaterial bedeckte Randstreifen 121 des Anodenstromkollektors aus. Dieser ist unmittelbar an die Unterseite des Kontaktblechs 113 geschweißt oder gelötet.

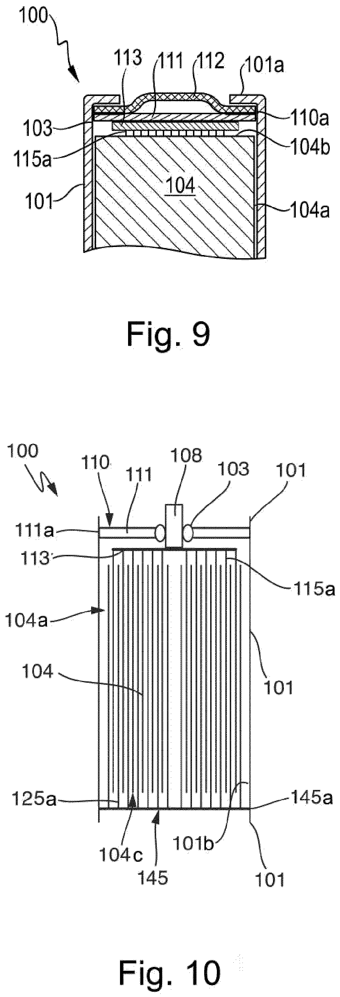

Die in Fig. 9 dargestellte Zelle 100 umfasst eine Deckelbaugruppe analog zu der in Fig. 1B dargestellten, allerdings mit einer Abweichung. Bei der hier dargestellten Deckelbaugruppe 110 dient die an dem Poldeckel 112 anliegende Metallscheibe 111 nämlich nicht zur Kontaktierung der Anodenstromkollektoren. Hierzu umfasst sie das metallische Kontaktblech 113. Dieses weist zwei Seiten auf, von denen eine in Richtung der Metallscheibe 111 weist, sogar flach an ihr anliegt, und durch Verschweißung oder Verlötung mit der Metallscheibe 111 verbunden ist. Aus der obenliegenden Stirnseite 104b des als Wickel ausgebildeten Elektroden-Separator-Verbunds 104 tritt der freie Randstreifen 121 des Anodenstromkollektors aus. Dieser liegt unmittelbar an der Unterseite des Kontaktblechs 113 an und ist mit der Unterseite des Kontaktblechs 113 verschweißt oder verlötet.

Die in Fig. 10 dargestellte Zelle 100 umfasst den Elektroden-Separator-Verbund 104, der axial in das hohlzylindrisch ausgebildete Gehäuseteil 101 eingeschoben ist, so dass sein Wickelmantel 104a an der Innenseite 101b des rohrförmig ausgebildeten Gehäuseteils 101 anliegt. Der Elektroden-Separator-Verbund 104 umfasst eine bandförmige Anode und eine bandförmige Kathode, die spiralförmig aufgewickelt sind. Die Anode umfasst einen bandförmigen Anodenstromkollektor und einen bandförmigen Kathodenstromkollektor. Der Anodenstromkollektor ist mit einer Schicht aus negativem Elektrodenmaterial beladen. Der Kathodenstromkollektor ist mit einer Schicht aus positivem Elektrodenmaterial beladen.

Aus der obenliegenden Stirnseite 104b des als Wickel ausgebildeten Elektroden-Separator-Verbunds 104 tritt der freie Randstreifen 121 des Anodenstromkollektors aus. Aus der untenliegenden Stirnseite 104c des als Wickel ausgebildeten Elektroden-Separator-Verbunds 104 tritt der freie Randstreifen 117 des Kathodenstromkollektors aus.

Die Zelle 100 umfasst das rohrförmig und hohlzylindrisch ausgebildete, metallische Gehäuseteil 101, das zwei endständige Öffnungen aufweist. Die obenliegende Öffnung ist durch die Metallscheibe 111 verschlossen, die derart in dem rohrförmig ausgebildeten Gehäuseteil 101 angeordnet ist, dass ihr Rand 111a entlang einer umlaufenden Kontaktzone an der Innenseite 101b des rohrförmig ausgebildeten Gehäuseteils 101 anliegt. Der Rand 111a der Metallscheibe 111 ist mit dem rohrförmig ausgebildeten Gehäuseteil 101 über eine umlaufende Schweiß- oder Lötnaht verbunden.

Die Metallscheibe 111 ist Bestandteil einer Deckelbaugruppe 110, die neben der Metallscheibe 111 das metallische Kontaktblech 113 und den Polstift 108 umfasst. Das metallische Kontaktblech 113 umfasst zwei Seiten, von denen eine, im Bild die obenliegende, in Richtung der Metallscheibe 111 weist. An der anderen Seite des Kontaktblechs 113, hier der untenliegenden Seite, liegt der Längsrand 115a unmittelbar an. Der Längsrand 115a ist mit dem Kontaktblech 113 durch Verschweißung oder Verlötung verbunden. Der Polstift 108 ist an das Kontaktblech 113 geschweißt oder gelötet und durch eine zentrale Durchbrechung in der Metallscheibe 111 aus dem Gehäuse der Zelle 100 herausgeführt.

Die Deckelbaugruppe 110 umfasst weiterhin das Isoliermittel 103, das den Polstift 108 und somit auch das mit dem Polstift verschweißte oder durch Verlötung verbundene Kontaktblech 113 gegen die Metallscheibe 111 elektrisch isoliert.

Die untenliegende Öffnung des Gehäuseteils 101 ist mit dem Verschlusselement 145 verschlossen. Bei dem Verschlusselement 145 handelt es sich um eine Metallscheibe, deren Rand 145a entlang einer umlaufenden Kontaktzone an der Innenseite 101b des rohrförmig ausgebildeten Gehäuseteils 101 anliegt. Der Rand 145a des Verschlusselements 145 ist mit dem rohrförmig ausgebildeten Gehäuseteil 101 über eine umlaufende Schweiß- oder Lötnaht verbunden.

An der innenliegenden (oberen) Seite des Kontaktblechs 113 liegt der Längsrand 125a des Kathodenstromkollektors unmittelbar an. Der Längsrand 125a ist mit dem Verschlusselement 145 durch Verschweißung oder Verlötung verbunden. Die Verschweißung kann beispielsweise mittels eines Lasers durch die Metallscheibe des Verschlusselements 145 hindurch bewirkt werden.

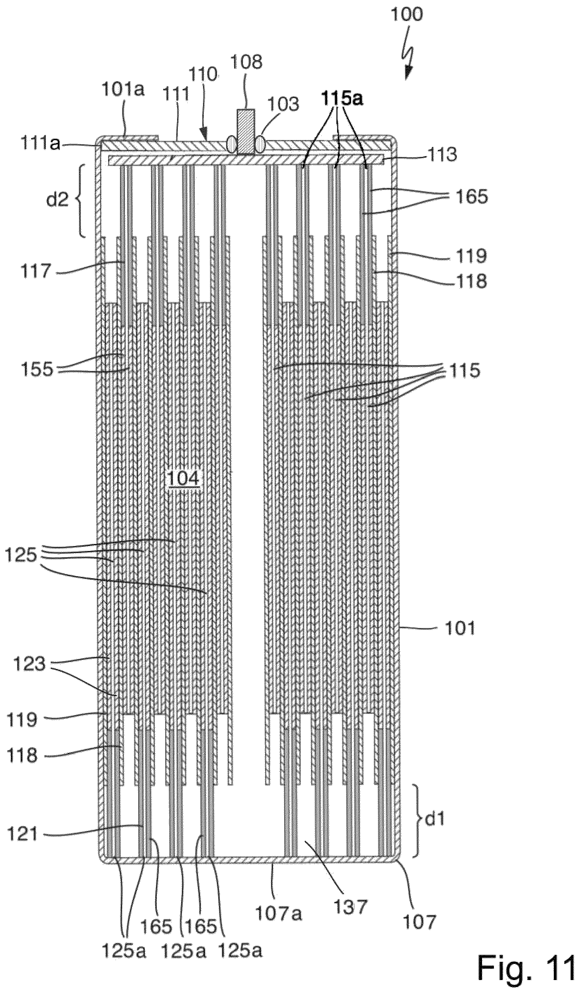

Die in **Fig. 11** dargestellte Zelle 100 umfasst ein hohlzylindrisch ausgebildetes Gehäuseteil 101, das Bestandteil des Gehäusebechers 107 ist, der den kreisförmigen Boden 107a sowie eine kreisförmige Öffnung (definiert durch den Rand 101a) umfasst. Bei dem Gehäusebecher 107 handelt es sich um ein Tiefziehteil. Der Gehäusebecher 107 schließt gemeinsam mit der Deckelbaugruppe 110, welche die flache Metallscheibe 111 mit dem kreisförmigem Rand 111a umfasst, einen Innenraum 137 ein, in dem der als Wickel ausgebildete Elektroden-Separator-Verbund 104 axial ausgerichtet ist. Die Metallscheibe 111 ist derart in dem rohrförmig ausgebildeten Gehäuseteil 101 angeordnet, dass ihr Rand 111a entlang einer umlaufenden Kontaktzone an der Innenseite 101b des rohrförmig ausgebildeten Gehäuseteils 101 anliegt. Ihr Rand 111a entsprecht dem Rand der Deckelbaugruppe und ist mit dem rohrförmig ausgebildeten Gehäuseteil 101 über eine umlaufende Schweiß- oder Lötnaht verbunden. Der Rand 101a des rohrförmig ausgebildeten Gehäuseteils 101 ist radial (hier um ca. 90 °) nach innen über den Rand 111a der Metallscheibe 111 umgebogen.

Der Elektroden-Separator-Verbund 104 liegt in Form eines zylindrischen Wickels mit zwei endständigen Stirnseiten vor, zwischen denen sich der umlaufende Wickelmantel erstreckt, der an der Innenseite des hohlzylindrisch ausgebildeten Gehäuseteils 101 anliegt. Er ist aus einer positiven Elektrode und einer negativen Elektrode sowie den Separatoren 118 und 119 gebildet, die jeweils bandförmig ausgebildet und spiralförmig gewickelt sind. Die zwei Stirnseiten des Elektroden-Separator-Verbunds 104 werden durch die Längsränder der Separatoren 118 und 119 gebildet. Aus diesen Stirnseiten ragen die Stromkollektoren 115 und 125 hervor, die beide aus Aluminium bestehen. Die entsprechenden Überstände sind mit d1 und d2 bezeichnet.

Aus der oberen Stirnseite des Elektroden-Separator-Verbunds 104 tritt der Anodenstromkollektor 115 aus, aus der unteren Stirnseite der Kathodenstromkollektor 125. Der Anodenstromkollektor 115 ist in einem streifenförmigen Hauptbereich mit einer Schicht aus einem negativen Elektrodenmaterial 155 beladen. Der Kathodenstromkollektor 125 ist in einem streifenförmigen Hauptbereich mit einer Schicht aus einem positiven Elektrodenmaterial 123 beladen. Der Anodenstromkollektor 115 weist einen Randstreifen 117 auf, der sich entlang seines Längsrands 115a erstreckt und der nicht mit dem Elektrodenmaterial 155 beladen ist. Stattdessen ist hier eine Beschichtung 165 aus einem keramischen Stützmaterial aufgebracht, die den Stromkollektor in diesem Bereich stabilisiert. Der Kathodenstromkollektor 125 weist einen Randstreifen 121 auf, der sich entlang seines Längsrands 125a erstreckt und der nicht mit dem Elektrodenmaterial 123 beladen ist. Stattdessen ist auch hier die Beschichtung 165 aus dem keramischen Stützmaterial aufgebracht.

Neben der Metallscheibe 111 umfasst die Deckelbaugruppe 110 weiterhin das Kontaktblech 113 und den Polstift 108. Das metallische Kontaktblech 113 umfasst zwei Seiten, von denen eine, im Bild die obenliegende, in Richtung der Metallscheibe 111 weist. An der anderen Seite des Kontaktblechs 113, hier der untenliegenden Seite, steht der Längsrand 115a über seine gesamte Länge in unmittelbarem Kontakt mit dem Kontaktblech 113 und damit mit der Deckelbaugruppe 110 und ist mit diesem mindestens über mehrere Abschnitte, bevorzugt über seine gesamte Länge, durch Verschweißung oder Verlötung verbunden. Alternativ kann hier die oben beschriebene Multi-Pin-Verbindung vorliegen. Die Deckelbaugruppe 110 dient somit gleichzeitig zur elektrischen Kontaktierung der Anode und als Gehäuseteil.

Der Polstift 108 ist an das Kontaktblech 113 geschweißt oder gelötet und durch eine zentrale Durchbrechung in der Metallscheibe 111 aus dem Gehäuse der Zelle 100 herausgeführt. Die Deckelbaugruppe 110 umfasst weiterhin das Isoliermittel 103, das den Polstift 108 und somit auch das mit dem Polstift verschweißte oder verlötete Kontaktblech 113 gegen die Metallscheibe 111 elektrisch isoliert. Lediglich die Metallscheibe 111 steht in unmittelbarem und damit auch in elektrischem Kontakt mit dem Gehäusebecher 107. Der Polstift 108 und das Kontaktblech 113 sind gegen den Gehäusebecher isoliert.

Der Rand 125a des Kathodenstromkollektors 125 steht über seine gesamte Länge in unmittelbarem Kontakt mit dem Boden 107a und ist mit diesem mindestens über mehrere Abschnitte, bevorzugt über seine gesamte Länge, durch Verschweißung (insbesondere mit Hilfe eines Lasers) oder Verlötung verbunden. Alternativ kann auch hier die oben beschriebene Multi-Pin-Verbindung vorliegen. Der Boden 107a dient somit nicht nur als Teil des Gehäuses sondern auch zur elektrischen Kontaktierung der Kathode.

Der Elektroden-Separator-Verbund 104 kann beispielsweise eine positive Elektrode aus 95 Gew.-% LMO, 2 Gew.-% eines Elektrodenbinders und 3 Gew.-% Ruß als Leitmittel umfassen. Die Anode 101 kann beispielsweise eine negative Elektrode aus 95 Gew.-% LTO, 2 Gew.-% eines Elektrodenbinders und 3 Gew.-% Ruß als Leitmittel umfassen. Als Elektrolyt kann eine 2 M Lösung von Lithiumtetrafluoroborat (LiBF₄) in Acetonitril eingesetzt werden.

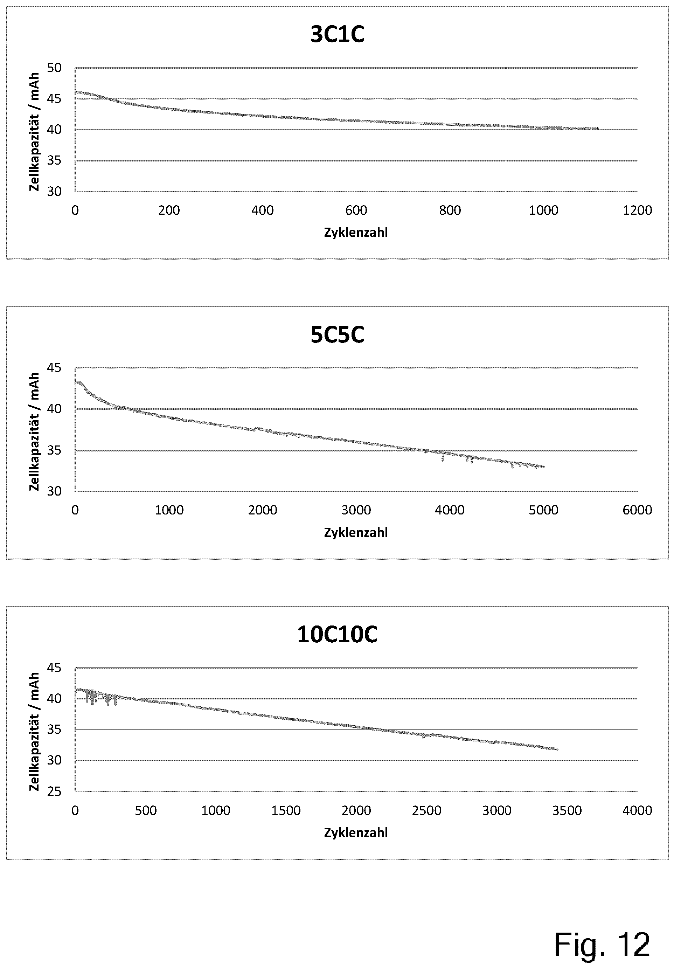

Die in **Fig. 12** dargestellte Diagramme illustrieren die gute Zyklisierbarkeit der erfindungsgemäßen Zelle. Bei einer Belastung von 10C (Laden) / 10C (Entladen) wurden nach 5000 Zyklen noch knapp 80% der Initial-Kapazität erzielt. Auch bei Belastungen von 3C/1C und 5C/5C wurden 1000 bzw. 2500 Zyklen stabil erreicht.

## Patentansprüche

1. Sekundäre Lithium-Ionen-Zelle mit den Merkmalen
a. die Zelle umfasst einen Elektroden-Separator-Verbund (104) mit der Sequenz Anode (120) / Separator (118) / Kathode (130),
b. die Anode (120) ist bandförmig ausgebildet und umfasst ein negatives Elektrodenmaterial (155) sowie einen bandförmigen Anodenstromkollektor (115) mit einem ersten Längsrand (115a) und einem zweiten Längsrand,
c. der Anodenstromkollektor (115) weist einen streifenförmigen Hauptbereich (122), der mit einer Schicht aus dem negativen Elektrodenmaterial (155) beladen ist, sowie einen freien Randstreifen (121), der sich entlang des ersten Längsrands (115a) erstreckt und der nicht mit dem Elektrodenmaterial (155) beladen ist, auf,
d. die Kathode (130) ist bandförmig ausgebildet und umfasst ein positives Elektrodenmaterial (123) sowie einen bandförmigen Kathodenstromkollektor (125) mit einem ersten Längsrand (125a) und einem zweiten Längsrand,
e. der Kathodenstromkollektor (125) weist einen streifenförmigen Hauptbereich (116), der mit einer Schicht aus dem positiven Elektrodenmaterial (123) beladen ist, sowie einen freien Randstreifen (117), der sich entlang des ersten Längsrands (115e) erstreckt und der nicht mit dem Elektrodenmaterial (125) beladen ist, auf,
f. der Elektroden-Separator-Verbund (104) liegt in Form eines Wickels mit zwei endständigen Stirnseiten (104b, 104c) vor,
g. die Elektroden-Separator-Verbund (104) ist von einem Gehäuse umschlossen,
h. die Anode (120) und die Kathode (130) sind derart ausgebildet und/oder innerhalb des Elektroden-Separator-Verbunds (104) zueinander angeordnet, dass der freie Randstreifen (121) des Anodenstromkollektors (115) aus einer der endständigen Stirnseiten und der freie Randstreifen (117) des Kathodenstromkollektors (125) aus der anderen der endständigen Stirnseiten austritt,
i. die Zelle weist ein Kontaktblech (113) auf, das mit einem der Randstreifen (117, 121) in unmittelbarem Kontakt steht, wobei es sich bei dem Kontaktblech um eine Metallscheibe handelt und die Metallscheibe auf einer ihrer Seiten mindestens eine rinnenförmige und/oder punktförmige Vertiefung aufweist, die auf ihrer anderen Seite als mindestens eine linienförmige und/oder punktförmige Erhöhung hervortritt, und der Randstreifen unmittelbar an die mindestens eine Erhöhung geschweißt oder gelötet ist,
j. die Schicht aus dem negativen Elektrodenmaterial (155) umfasst Lithiumtitanat (LTO) und
k. die Schicht aus dem positiven Elektrodenmaterial (123) umfasst Lithiummanganoxid (LMO).

2. Zelle nach Anspruch 1 mit den folgenden zusätzlichen Merkmalen:
a. Der Kathodenstromkollektor (125) umfasst Aluminium oder aus einer Aluminiumlegierung oder besteht aus dem Aluminium oder der Aluminiumlegierung.
b. Der Anodenstromkollektor (115) umfasst Aluminium oder aus einer Aluminiumlegierung oder besteht aus dem Aluminium oder der Aluminiumlegierung.

3. Zelle nach Anspruch 1 oder nach Anspruch 2 mit mindestens einem der folgenden zusätzlichen Merkmale:
a. Das positive Elektrodenmaterial (123) umfasst das LMO in einem Anteil von 70 Gew.-% bis 99,4 Gew.-%.
b. Das positive Elektrodenmaterial (123) umfasst einen Elektrodenbinder und/oder ein Leitmittel.
c. Der Elektrodenbinder ist in dem positiven Elektrodenmaterial (123) in einem Anteil von 0,5 Gew.-% bis 15 Gew.-% enthalten.
d. Das Leitmittel ist in dem positiven Elektrodenmaterial (123) in einem Anteil von 0,1 Gew.-% bis 15 Gew.-% enthalten.

4. Zelle nach einem der vorhergehenden Ansprüche mit mindestens einem der folgenden zusätzlichen Merkmale:
a. Die Schicht aus dem positiven Elektrodenmaterial (123) auf dem Kathodenstromkollektor (125) weist eine Dicke im Bereich von 20 bis 300 µm auf.

5. Zelle nach einem der vorhergehenden Ansprüche mit mindestens einem der folgenden zusätzlichen Merkmale:
a. Das negative Elektrodenmaterial (155) umfasst das LTO in einem Anteil von 70 Gew.-% bis 99,4 Gew.-%.
b. Das negative Elektrodenmaterial (155) umfasst einen Elektrodenbinder und/oder ein Leitmittel.
c. Der Elektrodenbinder ist in dem negativen Elektrodenmaterial (155) in einem Anteil von 0,5 Gew.-% bis 15 Gew.-% enthalten.
d. Das Leitmittel ist in dem negativen Elektrodenmaterial (155) in einem Anteil von 0,1 Gew.-% bis 15 Gew.-% enthalten.

6. Zelle nach einem der vorhergehenden Ansprüche mit dem folgenden zusätzlichen Merkmal:
a. Die Schicht aus dem negativen Elektrodenmaterial (155) auf dem Anodenstromkollektor (115) weist eine Dicke im Bereich von 20 µm bis 300 µm µm auf.

7. Zelle nach einem der vorhergehenden Ansprüche mit mindestens einem der folgenden zusätzlichen Merkmale:
a. Die Zelle umfasst einen Elektrolyten, der ein Lösemittel oder ein Lösemittelgemisch aus der Gruppe mit Acetonitril (ACN), Propylencarbonat (PC), γ-Butyrolacton (GBL), Adiponitril (ADN), Ethylencarbonat-Diethylcarbonat (EC-DEC), Ethylencarbonat-Dimethylcarbonat (EC-DMC), Ethylencarbonat-Ethylmethylcarbonat (EC-EMC), Ethylencarbonat-Dimethylcarbonat-Ethylmethylcarbonat (EC-DMC-EMC) und Ethylencarbonat-Dimethylcarbonat-Diethylcarbonat (EC-DMC-DEC) umfasst.
b. Die Zelle umfasst einen Elektrolyten, der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃ umfasst.
c. Das Leitsalz ist in einem Anteil von 0,5 M bis 5 M, insbesondere von 2 M, in dem Elektrolyten enthalten.
d. Die Zelle umfasst einen Elektrolyten, der ein Additiv aus der Gruppe mit Vinylencarbonat (VC) und Fluorethylencarbonat (FEC) umfasst.

8. Zelle nach einem der Ansprüche 1 bis 7 mit den folgenden zusätzlichen Merkmalen:
a. Die Zelle umfasst einen Elektrolyten, der als Lösemittel Acetonitril (ACN) umfasst.
b. Die Zelle umfasst einen Elektrolyten, der der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃, insbesondere Lithiumtetrafluoroborat (LiBF₄), umfasst.
c. Das Leitsalz ist in einer Konzentration von 1,0 bis 3,0 M, insbesondere von 1,5 bis 2,5 M, in dem Elektrolyten enthalten.

9. Zelle nach einem der Ansprüche 1 bis 7 mit den folgenden zusätzlichen Merkmalen:
a. Die Zelle umfasst einen Elektrolyten, der als Lösemittel eine Mischung aus Propylencarbonat (PC) und γ-Butyrolacton (GBL) umfasst.
b. Das Volumenverhältnis von PC : zu GBL in der Mischung liegt im Bereich von 10 : 90 bis 90 : 10, besonders bevorzugt beträgt es 30 : 70.
c. Die Zelle umfasst einen Elektrolyten, der der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃ umfasst.
d. Das Leitsalz ist in einer Konzentration von 0,5 M bis 5 M, insbesondere von 2 M, in dem Elektrolyten enthalten.

10. Zelle nach einem der Ansprüche 1 bis 7 mit den folgenden zusätzlichen Merkmalen:
a. Die Zelle umfasst einen Elektrolyten, der als Lösemittel Propylencarbonat (PC) umfasst.
b. Die Zelle umfasst einen Elektrolyten, der der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃, insbesondere Lithiumhexafluorophosphat (LiPF₆), umfasst.
c. Das Leitsalz ist in einer Konzentration von 1,0 bis 2,0 M in dem Elektrolyten enthalten.

11. Zelle nach einem der Ansprüche 1 bis 7 mit den folgenden zusätzlichen Merkmalen:
a. Die Zelle umfasst einen Elektrolyten, der als Lösemittel eine Mischung aus Ethylencarbonat (EC) und Dimethylcarbonat (DMC) umfasst.
b. Das Volumenverhältnis von EC : zu DMC in der Mischung liegt im Bereich von 1 : 7 bis 5 : 7, besonders bevorzugt beträgt es 3 : 7.
c. Die Zelle umfasst einen Elektrolyten, der der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃, insbesondere Lithiumhexafluorophosphat (LiPF₆), umfasst.
d. Das Leitsalz ist in einer Konzentration von 1,0 bis 2,0 M in dem Elektrolyten enthalten.
e. Der Elektrolyten umfasst Vinylencarbonat (VC) als Additiv, insbesondere in einer Konzentration von 1 Gew.-% bis 3 Gew.-%.

12. Zelle nach einem der Ansprüche 1 bis 7 mit den folgenden zusätzlichen Merkmalen:
a. Die Zelle umfasst einen Elektrolyten, der als Lösemittel eine Mischung aus Ethylencarbonat (EC) und Propylencarbonat (PC) und Dimethylcarbonat (DMC) umfasst.
b. Die Anteile der drei Komponenten EC, PC und DMC betragen in dem Elektrolyten relativ zueinander 1 : 2 : 7.
c. Die Zelle umfasst einen Elektrolyten, der der ein Leitsalz aus der Gruppe mit Tetratethylammoniumtetrafluoroborat (Et₄NBF₄), Lithiumhexafluorophosphat (LiPF₆), Lithiumhexafluoroarsenat (LiAsF₆), Lithiumtetrafluoroborat (LiBF₄), Lithiumperchlorat (LiClO₄), Lithiumbis(oxalato)borat (LiB(C₂O₄)₂) und LiP(C₆H₄O₂)₃, insbesondere Lithiumhexafluorophosphat (LiPF₆), umfasst.
d. Das Leitsalz ist in einer Konzentration von 0,5 M bis 5 M in dem Elektrolyten enthalten.
e. Die Zelle umfasst einen Elektrolyten, der als Co-Leitsalz Tetraethylammoniumtetrafluoroborat (Et₄NBF₄) umfasst.
f. Das Co-Leitsalz ist in einer Konzentration von 0,1 M bis 2 M in dem Elektrolyten enthalten.

## Claims

1. Secondary lithium-ion cell with the features
a. the cell comprises an electrode-separator assembly (104) with the sequence anode (120) / separator (118) / cathode (130),
b. the anode (120) is ribbon-shaped and comprises a negative electrode material (155) and a ribbon-shaped anode current collector (115) with a first longitudinal edge (115a) and a second longitudinal edge,
c. the anode current collector (115) has a strip-shaped main region (122) which is loaded with a layer of the negative electrode material (155) and a free edge strip (121) which extends along the first longitudinal edge (115a) and which is not loaded with the electrode material (155),
d. the cathode (130) is ribbon-shaped and comprises a positive electrode material (123) and a ribbon-shaped cathode current collector (125) with a first longitudinal edge (125a) and a second longitudinal edge,
e. the cathode current collector (125) has a strip-shaped main region (116) which is loaded with a layer of the positive electrode material (123) and a free edge strip (117) which extends along the first longitudinal edge (115e) and which is not loaded with the electrode material (125),
f. the electrode-separator assembly (104) is in the form of a coil with two terminal end faces (104b, 104c),
g. the electrode-separator assembly (104) is enclosed in a housing,
h. the anode (120) and the cathode (130) are formed and/or arranged within the electrode-separator assembly (104) relative to one another in such a way that the free edge strip (121) of the anode current collector (115) emerges from one of the terminal end faces and the free edge strip (117) of the cathode current collector (125) emerges from the other of the terminal end faces,
i. the cell has a contact sheet metal member (113) which is in direct contact with one of the edge strips (117, 121), wherein the contact sheet metal member is a metal disc, and the metal disc has, on one of its sides, at least one groove-shaped and/or point-shaped depression that protrudes on its other side as at least one line-shaped and/or point-shaped elevation, and the edge strip is welded or soldered directly to the at least one elevation.
j. the layer of negative electrode material (155) comprises lithium titanate (LTO) and
k. the layer of positive electrode material (123) comprises lithium manganese oxide (LMO).

2. Cell according to claim 1 with the following additional features:
a. The cathode current collector (125) comprises aluminum or aluminum alloy or is made of the aluminum or aluminum alloy.
b. The anode current collector (115) comprises aluminum or aluminum alloy or is made of the aluminum or aluminum alloy.

3. Cell according to claim 1 or claim 2 with at least one of the following additional features:
a. The positive electrode material (123) comprises the LMO in a proportion of 70 wt% to 99.4 wt%.
b. The positive electrode material (123) comprises an electrode binder and/or a conductive agent.
c. The electrode binder is contained in the positive electrode material (123) in a proportion of 0.5% to 15% by weight.
d. The conductive agent is contained in the positive electrode material (123) in a proportion of 0.1 wt.% to 15 wt.%.

4. Cell according to any of the preceding claims with the following additional feature:
a. The layer of positive electrode material (123) on the cathode current collector (125) has a thickness in the range of 20 to 300 µm.

5. Cell according to any one of the preceding claims, having at least one of the following additional features:
a. The negative electrode material (155) comprises the LTO in a proportion of 70 wt.% to 99.4 wt.%.
b. The negative electrode material (155) comprises an electrode binder and/or a conductive agent.
c. The electrode binder is contained in the negative electrode material (155) in a proportion of 0.5% to 15% by weight.
d. The conductive agent is contained in the negative electrode material (155) in a proportion of 0.1% to 15% by weight.

6. Cell according to any of the preceding claims with the following additional feature:
a. The layer of negative electrode material (155) on the anode current collector (115) has a thickness in the range of 20 µm to 300 µm.

7. Cell according to any one of the preceding claims, having at least one of the following additional features:
a. The cell comprises an electrolyte which comprises a solvent or a solvent mixture from the group comprising acetonitrile (ACN), propylene carbonate (PC), γ-butyrolactone (GBL), adiponitrile (ADN), ethylene carbonate-diethyl carbonate (EC-DEC), ethylene carbonate-dimethyl carbonate (EC-DMC), ethylene carbonate-ethyl methyl carbonate (EC-EMC), ethylene carbonate-dimethyl carbonate-ethyl methyl carbonate (EC-DMC-EMC) and ethylene carbonate-dimethyl carbonate-diethyl carbonate (EC-DMC-DEC).
b. The cell comprises an electrolyte containing a conducting salt selected from the group consisting of tetratethylammonium tetrafluoroborate (Et₄NBF₄), lithium hexafluorophosphate (LiPF₆), lithium hexafluoroarsenate (LiAsF₆), lithium tetrafluoroborate (LiBF₄), lithium perchlorate (LiClO₄), lithium bis(oxalato)borate (LiB(C₂O₄)₂) and LiP(C₆H₄O₂)₃.
c. The conducting salt is contained in the electrolyte in a proportion of 0.5 M to 5 M, in particular 2 M.
d. The cell comprises an electrolyte comprising an additive selected from the group consisting of vinylene carbonate (VC) and fluoroethylene carbonate (FEC).

8. Cell according to any one of claims 1 to 7 with the following additional features:
a. The cell comprises an electrolyte containing acetonitrile (ACN) as solvent.
b. The cell comprises an electrolyte comprising a conducting salt selected from the group consisting of tetratethylammonium tetrafluoroborate (Et₄NBF₄), lithium hexafluorophosphate (LiPF₆), lithium hexafluoroarsenate (LiAsF₆), lithium tetrafluoroborate (LiBF₄), lithium perchlorate (LiClO₄), lithium bis(oxalato)borate (LiB(C₂O₄)₂) and LiP(C₆H₄O₂)₃, in particular lithium tetrafluoroborate (LiBF₄).
c. The conducting salt is contained in the electrolyte in a concentration of 1.0 to 3.0 M, in particular 1.5 to 2.5 M.

9. Cell according to any one of claims 1 to 7 with the following additional features:
a. The cell comprises an electrolyte containing a mixture of propylene carbonate (PC) and γ-butyrolactone (GBL) as solvent.
b. The volume ratio of PC : to GBL in the mixture is in the range of 10 : 90 to 90 : 10, particularly preferably it is 30 : 70.
c. The cell comprises an electrolyte comprising a conducting salt selected from the group consisting of tetratethylammonium tetrafluoroborate (Et₄NBF₄), lithium hexafluorophosphate (LiPF₆), lithium hexafluoroarsenate (LiAsF₆), lithium tetrafluoroborate (LiBF₄), lithium perchlorate (LiClO₄), lithium bis(oxalato)borate (LiB(C₂O₄)₂) and LiP(C₆H₄O₂)₃.
d. The conducting salt is contained in the electrolyte in a concentration of 0.5 M to 5 M, in particular 2 M.

10. Cell according to any one of claims 1 to 7 with the following additional features:
a. The cell comprises an electrolyte containing propylene carbonate (PC) as a solvent.
b. The cell comprises an electrolyte comprising a conducting salt selected from the group consisting of tetratethylammonium tetrafluoroborate (Et₄NBF₄), lithium hexafluorophosphate (LiPF₆), lithium hexafluoroarsenate (LiAsF₆), lithium tetrafluoroborate (LiBF₄), lithium perchlorate (LiClO₄), lithium bis(oxalato)borate (LiB(C₂O₄)₂) and LiP(C₆H₄O₂)₃, in particular lithium hexafluorophosphate (LiPF₆).
c. The conducting salt is contained in the electrolyte in a concentration of 1.0 to 2.0 M.

11. Cell according to any one of claims 1 to 7 with the following additional features:
a. The cell comprises an electrolyte containing a mixture of ethylene carbonate (EC) and dimethyl carbonate (DMC) as solvent.
b. The volume ratio of EC : to DMC in the mixture is in the range of 1 : 7 to 5 : 7, particularly preferably it is 3 : 7.
c. The cell comprises an electrolyte comprising a conducting salt selected from the group consisting of tetratethylammonium tetrafluoroborate (Et₄NBF₄), lithium hexafluorophosphate (LiPF₆), lithium hexafluoroarsenate (LiAsF₆), lithium tetrafluoroborate (LiBF₄), lithium perchlorate (LiClO₄), lithium bis(oxalato)borate (LiB(C₂O₄)₂) and LiP(C₆H₄O₂)₃, in particular lithium hexafluorophosphate (LiPF₆).
d. The conducting salt is contained in the electrolyte in a concentration of 1.0 to 2.0 M.
e. The electrolyte comprises vinylene carbonate (VC) as an additive, in particular in a concentration of 1 wt.% to 3 wt.%.

12. Cell according to any one of claims 1 to 7 with the following additional features:
a. The cell comprises an electrolyte containing a mixture of ethylene carbonate (EC) and propylene carbonate (PC) and dimethyl carbonate (DMC) as solvents.
b. The proportions of the three components EC, PC and DMC in the electrolyte are 1 : 2 : 7 relative to each other.
c. The cell comprises an electrolyte comprising a conducting salt selected from the group consisting of tetratethylammonium tetrafluoroborate (Et₄NBF₄), lithium hexafluorophosphate (LiPF₆), lithium hexafluoroarsenate (LiAsF₆), lithium tetrafluoroborate (LiBF₄), lithium perchlorate (LiClO₄), lithium bis(oxalato)borate (LiB(C₂O₄)₂) and LiP(C₆H₄O₂)₃, in particular lithium hexafluorophosphate (LiPF₆).
d. The conducting salt is contained in the electrolyte in a concentration of 0.5 M to 5 M.
e. The cell comprises an electrolyte that includes tetraethylammonium tetrafluoroborate (Et₄NBF₄) as the co-conducting salt.
f. The co-conducting salt is contained in the electrolyte in a concentration of 0.1 M to 2 M.

## Revendications

1. Cellule secondaire lithium-ion présentant les caractéristiques
a. la cellule comprend un ensemble électrodes-séparateur (104) présentant la séquence anode (120) / séparateur (118) / cathode (130),
b. l'anode (120) est réalisée en forme de bande et comprend un matériau d'électrode négative (155) ainsi qu'un collecteur de courant d'anode (115) en forme de bande présentant un premier bord longitudinal (115a) et un deuxième bord longitudinal,
c. le collecteur de courant d'anode (115) présente une zone principale (122) en forme de bande, qui est chargée d'une couche du matériau d'électrode négative (155), ainsi qu'une bande de bord libre (121), qui s'étend le long du premier bord longitudinal (115a) et qui n'est pas chargée du matériau d'électrode (155),
d. la cathode (130) est réalisée en forme de bande et comprend un matériau d'électrode positive (123) ainsi qu'un collecteur de courant de cathode (125) en forme de bande présentant un premier bord longitudinal (125a) et un deuxième bord longitudinal,
e. le collecteur de courant de cathode (125) présente une zone principale (116) en forme de bande, qui est chargée d'une couche du matériau d'électrode positive (123), ainsi qu'une bande de bord libre (117), qui s'étend le long du premier bord longitudinal (115e) et qui n'est pas chargée du matériau d'électrode (125),
f. l'ensemble électrodes-séparateur (104) se présente sous la forme d'un enroulement présentant deux faces frontales terminales (104b, 104c),
g. l'ensemble électrodes-séparateur (104) est enfermé dans un boîtier,
h. l'anode (120) et la cathode (130) sont réalisées et/ou disposées l'une par rapport à l'autre au sein de l'ensemble électrodes-séparateur (104) de telle sorte que la bande de bord libre (121) du collecteur de courant d'anode (115) fait saillie hors de l'une des faces frontales terminales et que la bande de bord libre (117) du collecteur de courant de cathode (125) fait saillie hors de l'autre des faces frontales terminales,
i. la cellule présente une plaque de contact (113) qui est en contact direct avec l'une des bandes de bord (117, 121), la plaque de contact étant un disque métallique et le disque métallique présentant, sur l'une de ses faces, au moins un renfoncement en forme de rainure et/ou ponctuel, qui fait saillie sur son autre face sous la forme d'au moins une surépaisseur linéaire et/ou ponctuelle, et la bande de bord étant directement soudée ou brasée à l'au moins une surépaisseur,
j. la couche du matériau d'électrode négative (155) comprend du titanate de lithium (LTO) et
k. la couche du matériau d'électrode positive (123) comprend de l'oxyde de lithium et de manganèse (LMO).

2. Cellule selon la revendication 1, présentant les caractéristiques supplémentaires suivantes :
a. le collecteur de courant de cathode (125) comprend de l'aluminium ou un alliage d'aluminium ou est constitué de l'aluminium ou de l'alliage d'aluminium.
b. le collecteur de courant d'anode (115) comprend de l'aluminium ou un alliage d'aluminium ou est constitué de l'aluminium ou de l'alliage d'aluminium.

3. Cellule selon la revendication 1 ou selon la revendication 2 présentant au moins l'une des caractéristiques supplémentaires suivantes :
a. le matériau d'électrode positive (123) comprend le LMO dans une proportion de 70 % en poids à 99,4 % en poids.
b. le matériau d'électrode positive (123) comprend un liant d'électrode et/ou un agent conducteur.
c. le liant d'électrode est contenu dans le matériau d'électrode positive (123) dans une proportion de 0,5 % en poids à 15 % en poids.
d. l'agent conducteur est contenu dans le matériau d'électrode positive (123) dans une proportion de 0,1 % en poids à 15 % en poids.

4. Cellule selon l'une des revendications précédentes présentant au moins l'une des caractéristiques supplémentaires suivantes :
a. la couche du matériau d'électrode positive (123) sur le collecteur de courant de cathode (125) présente une épaisseur dans la plage de 20 à 300 µm.

5. Cellule selon l'une des revendications précédentes présentant au moins l'une des caractéristiques supplémentaires suivantes :
a. le matériau d'électrode négative (155) comprend le LTO dans une proportion de 70 % en poids à 99,4 % en poids.
b. le matériau d'électrode négative (155) comprend un liant d'électrode et/ou un agent conducteur.
c. le liant d'électrode est contenu dans le matériau d'électrode négative (155) dans une proportion de 0,5 % en poids à 15 % en poids.
d. l'agent conducteur est contenu dans le matériau d'électrode négative (155) dans une proportion de 0,1 % en poids à 15 % en poids.

6. Cellule selon l'une des revendications précédentes présentant la caractéristique supplémentaire suivante :
a. la couche du matériau d'électrode négative (155) sur le collecteur de courant d'anode (115) présente une épaisseur dans la plage de 20 µm à 300 µm.

7. Cellule selon l'une des revendications précédentes présentant au moins l'une des caractéristiques supplémentaires suivantes :
a. la cellule comprend un électrolyte qui comprend un solvant ou un mélange de solvants du groupe comprenant l'acétonitrile (ACN), le carbonate de propylène (PC), la γ-butyrolactone (GBL), l'adiponitrile (ADN), le carbonate d'éthylène-carbonate de diéthyle (EC-DEC), le carbonate d'éthylène-carbonate de diméthyle (EC-DMC), le carbonate d'éthylène-carbonate d'éthyle et de méthyle (EC-EMC), le carbonate d'éthylène-carbonate de diméthyle-carbonate d'éthyle et de méthyle (EC-DMC-EMC) et le carbonate d'éthylène-carbonate de diméthyle-carbonate de diéthyle (EC-DMC-DEC).
b. la cellule comprend un électrolyte qui comprend un sel conducteur du groupe comprenant le tétrafluoroborate de tétraéthylammonium (Et₄NBF₄), l'hexafluorophosphate de lithium (LiPF₆), l'hexafluoroarséniate de lithium (LiAsF₆), le tétrafluoroborate de lithium (LiBF₄), le perchlorate de lithium (LiClO₄), le bis (oxalato)borate de lithium (LiB(C₂O₄)₂) et LiP(C₆H₄O₃)₃.
c. le sel conducteur est contenu dans l'électrolyte dans une proportion de 0,5 M à 5 M, en particulier de 2 M.
d. la cellule comprend un électrolyte qui comprend un additif du groupe comprenant le carbonate de vinylène (VC) et le carbonate de fluoroéthylène (FEC).

8. Cellule selon l'une des revendications 1 à 7 présentant les caractéristiques supplémentaires suivantes :
a. la cellule comprend un électrolyte qui comprend de l'acétonitrile (ACN) en tant que solvant.
b. la cellule comprend un électrolyte qui comprend un sel conducteur du groupe comprenant le tétrafluoroborate de tétraéthylammonium (Et₄NBF₄), l'hexafluorophosphate de lithium (LiPF₆), l'hexafluoroarséniate de lithium (LiAsF₆), le tétrafluoroborate de lithium (LiBF₄), le perchlorate de lithium (LiClO₄), le bis (oxalato) borate de lithium (LiB(C₂O₄)₂) et LiP(C₆H₄O₂)₃, en particulier le tétrafluoroborate de lithium (LiBF₄).
c. le sel conducteur est contenu dans l'électrolyte à une concentration de 1,0 à 3,0 M, en particulier de 1,5 à 2,5 M.

9. Cellule selon l'une des revendications 1 à 7 présentant les caractéristiques supplémentaires suivantes :
a. la cellule comprend un électrolyte qui comprend, en tant que solvant, un mélange de carbonate de propylène (PC) et de γ-butyrolactone (GBL).
b. le rapport volumique du PC au GBL dans le mélange se situe dans la plage de 10: 90 à 90: 10, de manière particulièrement préférée de 30: 70.
c. la cellule comprend un électrolyte qui comprend un sel conducteur du groupe comprenant le tétrafluoroborate de tétraéthylammonium (Et₄NBF₄), l'hexafluorophosphate de lithium (LiPF₆), l'hexafluoroarséniate de lithium (LiAsF₆), le tétrafluoroborate de lithium (LiBF₄), le perchlorate de lithium (LiClO₄), le bis (oxalato)borate de lithium (LiB(C₂O₄)₂) et LiP(C₆H₄O₂)₃.
d. le sel conducteur est contenu dans l'électrolyte à une concentration de 0,5 M à 5 M, en particulier de 2 M.

10. Cellule selon l'une des revendications 1 à 7 présentant les caractéristiques supplémentaires suivantes :
a. la cellule comprend un électrolyte qui comprend du carbonate de propylène (PC) en tant que solvant.
b. la cellule comprend un électrolyte qui comprend un sel conducteur du groupe comprenant le tétrafluoroborate de tétraéthylammonium (Et₄NBF₄), l'hexafluorophosphate de lithium (LiPF₆), l'hexafluoroarséniate de lithium (LiAsF₆), le tétrafluoroborate de lithium (LiBF₄), le perchlorate de lithium (LiClO₄), le bis (oxalato) borate de lithium (LiB(C₂O₄)₂) et LiP(C₆H₄O₂)₃, en particulier l'hexafluorophosphate de lithium (LiPF₆).
c. le sel conducteur est contenu dans l'électrolyte à une concentration de 1,0 à 2,0 M.

11. Cellule selon l'une des revendications 1 à 7 présentant les caractéristiques supplémentaires suivantes :
a. la cellule comprend un électrolyte qui comprend, en tant que solvant, un mélange de carbonate d'éthylène (EC) et de carbonate de diméthyle (DMC).
b. le rapport volumique de l'EC au DMC dans le mélange se situe dans la plage de 1: 7 à 5: 7, de manière particulièrement préférée de 3: 7.
c. la cellule comprend un électrolyte qui comprend un sel conducteur du groupe comprenant le tétrafluoroborate de tétraéthylammonium (Et₄NBF₄), l'hexafluorophosphate de lithium (LiPF₆), l'hexafluoroarséniate de lithium (LiAsF₆), le tétrafluoroborate de lithium (LiBF₄), le perchlorate de lithium (LiClO₄), le bis (oxalato)borate de lithium (LiB(C₂O₄)₂) et LiP(C₆H₄O₂)₃, en particulier l'hexafluorophosphate de lithium (LiPF₆).
d. le sel conducteur est contenu dans l'électrolyte à une concentration de 1,0 à 2,0 M.
e. l'électrolyte comprend du carbonate de vinylène (VC) en tant qu'additif, en particulier à une concentration de 1 % en poids à 3 % en poids.

12. Cellule selon l'une des revendications 1 à 7 présentant les caractéristiques supplémentaires suivantes :
a. la cellule comprend un électrolyte qui comprend, en tant que solvant, un mélange de carbonate d'éthylène (EC) et de carbonate de propylène (PC) et de carbonate de diméthyle (DMC).
b. les proportions des trois composants EC, PC et DMC dans l'électrolyte sont, les unes par rapport aux autres, de 1: 2: 7.
c. la cellule comprend un électrolyte qui comprend un sel conducteur du groupe comprenant le tétrafluoroborate de tétraéthylammonium (Et₄NBF₄), l'hexafluorophosphate de lithium (LiPF₆), l'hexafluoroarséniate de lithium (LiAsF₆), le tétrafluoroborate de lithium (LiBF₄), le perchlorate de lithium (LiCIO₄), le bis(oxalato)borate de lithium (LiB(C₂O₄)₂) et LiP(C₆H₄O₂)₃, en particulier l'hexafluorophosphate de lithium (LiPF₆).
d. le sel conducteur est contenu dans l'électrolyte à une concentration de 0,5 M à 5 M.
e. la cellule comprend un électrolyte qui comprend du tétrafluoroborate de tétraéthylammonium (Et₄NBF₄) en tant que co-sel conducteur.
f. le co-sel conducteur est contenu dans l'électrolyte à une concentration de 0,1 M à 2 M.
